(19) Europäisches Patentamt
European Patent Office
Office européen des brevets

(11) **EP 3 904 579 B1**

(12) **EUROPEAN PATENT SPECIFICATION**

(45) Date of publication and mention of the grant of the patent:
**31.07.2024 Bulletin 2024/31**

(21) Application number: **19905760.5**

(22) Date of filing: **13.12.2019**

(51) International Patent Classification (IPC):
***B01D 39/16*** *(2006.01)* ***A62B 23/02*** *(2006.01)*
***B32B 5/02*** *(2006.01)* ***B32B 5/06*** *(2006.01)*
***B32B 5/26*** *(2006.01)* ***D04H 1/4374*** *(2012.01)*
***D04H 1/4382*** *(2012.01)* ***D04H 1/498*** *(2012.01)*
***D04H 1/56*** *(2006.01)* ***D04H 3/016*** *(2012.01)*
***D04H 3/16*** *(2006.01)* *A41D 13/11 (2006.01)*
*A62B 18/02 (2006.01)* *B03C 3/28 (2006.01)*

(52) Cooperative Patent Classification (CPC):
**B01D 39/1623; A62B 23/02; B01D 39/1615; B32B 5/022; B32B 5/024; B32B 5/026; B32B 5/06; B32B 5/08; B32B 5/26; D04H 1/435; D04H 1/4374; D04H 1/43838; D04H 1/492; D04H 1/498; D04H 1/56;** (Cont.)

(86) International application number:
**PCT/JP2019/048888**

(87) International publication number:
**WO 2020/137605 (02.07.2020 Gazette 2020/27)**

(54) **FIBER STRUCTURE AND APPLICATION THEREOF**

FASERSTRUKTUR UND DEREN ANWENDUNG

STRUCTURE FIBREUSE ET SON APPLICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.12.2018 JP 2018247780**
**28.12.2018 JP 2018247781**

(43) Date of publication of application:
**03.11.2021 Bulletin 2021/44**

(73) Proprietor: **Kuraray Kuraflex Co., Ltd.**
**Okayama-shi, Okayama 702-8045 (JP)**

(72) Inventors:
- **NAKAYAMA, Kazuhisa**
**Okayama-shi, Okayama 702-8045 (JP)**
- **OCHIAI, Toru**
**Okayama-shi, Okayama 702-8045 (JP)**
- **OBATA, Soichi**
**Okayama-shi, Okayama 702-8045 (JP)**

(74) Representative: **Müller-Boré & Partner Patentanwälte PartG mbB**
**Friedenheimer Brücke 21**
**80639 München (DE)**

(56) References cited:
**WO-A1-2011/004834** **JP-A- 2000 017 558**
**JP-A- 2001 279 570** **JP-A- 2018 178 337**

- **No further relevant documents disclosed**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)
**D04H 3/007; D04H 3/016; D04H 3/11; D04H 3/16;**
A41D 13/11; A62B 18/02; B01D 2239/0233; B01D 2239/0428; B01D 2239/0435; B01D 2239/0622; B01D 2239/0627; B01D 2239/064; B01D 2239/0654; B01D 2239/0663; B01D 2239/1233; B01D 2239/1291; B03C 3/28; B32B 2250/02; B32B 2250/20; B32B 2262/02; B32B 2262/0215; B32B 2262/0223; B32B 2262/023; B32B 2262/0238; B32B 2262/0246; B32B 2262/0253; B32B 2262/0261; B32B 2262/0269; B32B 2262/0276; B32B 2262/0292; B32B 2262/04; B32B 2262/062; B32B 2262/065; B32B 2262/08; B32B 2262/12; B32B 2262/14; B32B 2307/306; B32B 2307/718; B32B 2307/72; B32B 2307/73; B32B 2307/732; B32B 2509/00

## Description

### TECHNICAL FIELD

The present invention relates to a fiber structure in which an extra-fine fiber layer and a substrate layer are integrated into a deep level, and more particularly to a heat-resistant fiber structure in which a heat-resistant extra-fine fiber layer and a heat-resistant substrate layer are integrated into a deep level.

### BACKGROUND OF THE INVENTION

Nonwoven fabrics have been conventionally used as filtering materials for air filters. Among them, a nonwoven fabric made of meltblown extra-fine fibers is excellent in collecting microdusts such as pollens and airborne dusts in air or gas.

Further, in order to improve collection efficiency of such dusts, an attempt has been made to make a nonwoven fabric an electret (or electret-enhanced media) so as to achieve a higher dust collection efficiency by means of electrostatic action in addition to physical capture.

For example, Patent Document 1 (Japanese Patent Laid-open Publication No. 2003-003367) proposes an electret fiber sheet in which the fiber sheet is charged so that electric positive and negative charges exist together on the front and back surfaces to have charged portions in total of 50% or more based on each of the entire surface area with respect to both the front and back surfaces of the fiber sheet.

Patent Document 2 (Japanese Patent Laid-open Publication No. 2018-178337) describes an embossed, needled, laminated web comprising a middle layer of meltblown PPS fibers and outer layers of long PPS fibers.

### RELATED ART DOCUMENT

### PATENT DOCUMENT

Patent Document 1 Japanese Patent Laid-open Publication No. 2003-003367
Patent Document 2 Japanese Patent Laid-open Publication No. 2018-178337

### SUMMARY OF THE INVENTION

### PROBLEMS TO BE SOLVED BY THE INVENTION

Patent Document 1 recites achievement in high dust collection efficiency, whereas Patent Document 1 merely states that a meltblown nonwoven fabric is preferable as a material for an electret fiber sheet. However, since the meltblown nonwoven fabric is composed of extra-fine single fibers, although the meltblown nonwoven fabric is excellent in collecting microdusts, the meltblown nonwoven fabric with high density of fibers because of extra-fine fibers has a problem to have a high pressure loss at the time of gas permeation.

In order to obtain a fiber structure with a low pressure loss, the fiber structure should be composed of constituent fibers with a large single fiber fineness. However, the large single fiber fineness of the nonwoven fabric causes a reduced surface area of the nonwoven fabric so as to cause a problem of reduced collection efficiency. Therefore, it is contradictory to have a high collection efficiency while having a low pressure loss.

Therefore, an object of the present invention is to provide a fiber structure capable of achieving both high collection efficiency and low pressure loss.

### MEANS FOR SOLVING THE PROBLEM

The present inventors have conducted extensive studies for achieving the objects described above, and considered that combination use of an extra-fine fiber layer having a small fiber diameter to improve collection efficiency and a substrate layer having a large fiber diameter to contribute to low pressure loss achieves both high collection efficiency and low pressure loss. Based on the consideration, the inventors have surprisingly found that although it is impossible to reduce pressure loss by simply superimposing (overlapping) the extra-fine fiber layer on the substrate layer, where (i) the extra-fine fiber layer spreads in a plane direction for the extra-fine fiber layer to act as a collector, and where (ii) a part of the extra-fine fibers constituting the extra-fine fiber layer are physically pushed into the substrate layer in the thickness direction, and further a part of the pushed extra-fine fibers are widened in the thickness direction

as well as the crosswise direction in the substrate layer to be integrated into a deep level (deeply pushed) with the substrate layer, the obtained fiber structure can achieve high collection efficiency even having an unprecedented low pressure loss. Based on these findings, the present inventors have accomplished the present invention.

That is, the present invention is defined by the following aspects.

Aspect 1

A fiber structure comprising an extra-fine fiber layer spreading (preferably continuously spreading) in a plane direction, and a substrate layer adjoining the extra-fine fiber layer; wherein the extra-fine fiber layer comprises extra-fine fibers having a number average single fiber diameter of 5 μm or less; the substrate layer comprises non-extra-fine fibers having a number average single fiber diameter of 7 μm or more; in a cross section along a thickness direction of the fiber structure, the substrate layer contains mixture portions in each of which some of the extra-fine fibers pushed (shoved) between the non-extra-fine fibers are widened in a crosswise direction; and where the substrate layer is equally divided into three segments and each of the segments is denoted sequentially from the extra-fine fiber layer side as a proximal region, a central region, and a distal region, at least a part of the pushed extra-fine fibers from the extra-fine fiber layer reach the distal region, wherein the fiber structure is an entangled product of one or more extra-fine fiber layers formed of the extra-fine fibers with one or more non-extra-fine fiber layers formed of the non-extra-fine fibers, the extra-fine fiber layer is a nonwoven fabric, the non-extra-fine fiber layer is a nonwoven fabric, the fibers constituting the substrate layer contain at least one species selected from the group consisting of polyolefin-based fibers, polyester-based fibers, acrylic-based fibers, heat-resistant fibers not completely molten after being heated at 200°C for 3 hours, and composite fibers thereof in a proportion of 90% by mass or more, wherein the heat-resistant fibers are at least one of polyetheretherketone fibers, polyetherketone fibers, polyetherketoneketone fibers, polyphenylene sulfide fibers, aromatic polyamide fibers, aramid fibers, polyimide-based fibers, polyetherimide fibers, polyamideimide fibers, polybenzoxazole fibers, polybenzoimidazole fibers, polybenzothiazole fibers, polytetrafluoroethylene fibers, melamine fibers, and novoloid fibers, and the fiber structure has a basis weight of 20 to 180 $g/m^2$.

Aspect 2

The fiber structure according to aspect 1, wherein the fiber structure includes a heat-resistant extra-fine fiber layer as the extra-fine fiber layer and a heat-resistant substrate layer as the substrate layer, the heat-resistant extra-fine fiber layer comprises heat-resistant extra-fine fibers not completely molten after being heated at 200°C for 3 hours, and the heat-resistant substrate layer comprises heat-resistant non-extra-fine fibers not completely molten after being heated at 200°C for 3 hours.

Aspect 3

The fiber structure according to aspect 1 or 2, wherein the mixture portions in the fiber structure have an average width W of 120 μm or more, the width is determined along a boundary line between the central region and the distal region in a cross section along the thickness direction of the fiber structure.

Aspect 4

The fiber structure according to any one of aspects 1 to 3, wherein the extra-fine fibers have an existence proportion of 1 to 20% in the distal region in the cross section of the fiber structure.

Aspect 5

The fiber structure according to any one of aspects 1 to 4, wherein the fiber structure has a density of the extra-fine fibers excluding the non-extra-fine fibers of 0.1 $g/cm^3$ or less.

Aspect 6

The fiber structure according to any one of aspects 1 to 5, wherein the extra-fine fiber layer is a meltblown nonwoven fabric; and the substrate layer is a spunlace (hydroentangled) nonwoven fabric.

Aspect 7

The fiber structure according to any one of aspects 1 to 6, wherein the fiber structure comprises fibers that are unmelted (maintaining a fiber shape thereof) after heating at 200°C for 3 hours.

Aspect 8

The fiber structure according to any one of aspects 1 to 7, wherein the fiber structure is an electret fiber structure.

Aspect 9

The fiber structure according to any one of aspects 1 to 8, wherein the fiber structure has a collection efficiency of 70% or higher.

Aspect 10

The fiber structure according to any one of aspects 1 to 9, wherein the fiber structure has a QF value of 0.21 or more, wherein the QF value is calculated from a collection efficiency and a pressure loss and represented by the following formula:

$$QF\ value = -\ln(1 - collection\ efficiency\ (\%) / 100) / pressure\ loss\ (Pa).$$

Aspect 11 The fiber structure according to any one of aspects 1 to 10, wherein the fiber structure has a collection efficiency of 70% or more after heating at 100°C for 48 hours.
Aspect 12 A filter comprising the fiber structure recited in any one of aspects 1 to 11.
Aspect 13
A mask comprising the filter recited in aspect 12.

It should be noted that the present invention encompasses any combination of at least two features disclosed in the claims and/or the specification and/or the drawings. In particular, any combination of two or more of the appended claims should be equally construed as included within the scope of the present invention.

EFFECT OF THE INVENTION

According to the fiber structure of the present invention, since the extra-fine fibers are pushed between non-extra-fine fibers of the substrate layer to be integrated into a deep level, it is possible to achieve high collection efficiency while achieving low pressure loss.

BRIEF DESCRIPTION OF THE DRAWINGS

The present invention will become more clearly understood from the following description of preferred embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims.

Fig. 1 is an enlarged photograph showing a cross section in the thickness direction of the fiber structure according to one embodiment of this invention.
Fig. 2 is a conceptional cross-sectional schematic view illustrating a cross section of a part of a fiber structure according to one embodiment of the present invention in the thickness direction of the fiber structure.

DESCRIPTION OF EMBODIMENTS

The fiber structure according to the present invention is a fiber structure comprising an extra-fine fiber layer spreading (preferably continuously spreading) in a plane direction, and a substrate layer adjoining the extra-fine fiber layer. The fiber structure may include a heat-resistant extra-fine fiber layer as the extra-fine fiber layer and a heat-resistant substrate layer as the substrate layer, in which the extra-fine fiber layer may comprise heat-resistant extra-fine fibers, and the substrate layer may comprise heat-resistant non-extra-fine fibers.

Method for producing fiber structure

The method for producing a fiber structure according to the present invention at least comprises a step of preparing a stacked material of a specific fiber sheet for an extra-fine fiber layer and a fiber sheet for a substrate layer; and a step of performing an entangling process of the stacked material. Entangling treatment of such a stacked material enables to push (puncture) the extra-fine fibers between the non-extra-fine fibers constituting the substrate layer, as well as to make the pushed extra-fine fibers widened in the thickness direction and the crosswise direction of the substrate layer so that the extra-fine fiber layer can be integrated with the substrate layer into a deep level.

Preparation Step

In the preparation step, a stacked material of a specific fiber sheet for an extra-fine fiber layer and a fiber sheet for a substrate layer is prepared. A fiber sheet for an extra-fine fiber layer and a fiber sheet for a substrate layer may be separately prepared and be stacked to give a stacked material. Alternatively, a fiber sheet (for example, a fiber sheet for a substrate layer) is used as a support for stacking another fiber sheet (for example, a fiber sheet for an extra-fine fiber layer) to give a stacked material. From the viewpoint of increasing material variation, it is preferred that a fiber sheet for a substrate layer and a fiber sheet for an extra-fine fiber layer may be separately prepared and stacked. The stacked material may be in a state in which the adjacent sheets are preliminarily bonded with each other, or may be in a state in which they are simply overlapped without being bonded. From the viewpoint of obtaining a fiber structure with desirable

permeability without binder, the stacked material may be preferably a simply overlapped product without being bonded.

Fiber Sheet for Substrate Layer

The fiber sheet for the substrate layer comprises non-extra-fine fibers, and is not particularly limited to a specific one as long as extra-fine fibers pushed between the non-extra-fine fibers can be further widened in the crosswise direction of the substrate layer by entangling process. The fiber sheet for the substrate layer is a nonwoven fabric. From the viewpoint of entangling processibility with a sheet for the extra-fine fiber layer, the substrate layer may be preferably used as a dry-laid nonwoven fabric, a direct-spun nonwoven fabric (for example, a spunbonded nonwoven fabric), and the like. The fiber sheet for the substrate layer may be used singly or in combination of two or more.

Fibers constituting a dry-laid nonwoven fabric may have a fiber length of, for example, about 15 to 70 mm, preferably about 20 to 65 mm, more preferably about 30 to 60 mm, and even more preferably about 35 to 55 mm. Dry-laid nonwoven fabrics having such a fiber length can be distinguished from wet-laid nonwoven fabrics usually having a fiber length of 10 mm or less by determination of their fiber length.

For example, in order to produce a dry-laid nonwoven fabric, a web is formed from a predetermined fiber aggregate by a card method or an air-laid method. Thus-obtained web is subjected to binding process for binding fibers so as to make a resultant to have a practical strength. As the binding process, there may be mentioned chemical bonding (for example, chemical bond method), thermal bonding (for example, thermal bond method, steam jet method), and mechanical bonding (for example, spunlacing method, needle punching method), and others. In view of convenience, it is preferred to use the spunlace method in which entanglement is carried out by hydroentanglement process.

More specifically, examples of nonwoven fabric may include chemical-bonded nonwoven fabrics, thermal-bonded nonwoven fabrics, spunlace nonwoven fabrics, needle punch nonwoven fabrics, air-laid nonwoven fabrics, steam jet nonwoven fabrics, and spunbond nonwoven fabrics, and the like. Of these, preferable one may include spunlace nonwoven fabrics and steam jet nonwoven fabrics because these nonwoven fabrics are susceptible to spreading of extra-fine fibers in the crosswise direction.

The fibers constituting the fiber sheet for the substrate layer can be selected according to the intended use, and comprise polyolefinic fibers formed from a polyolefinic resin such as a polyethylene and a polypropylene, polyester fibers formed from a polyester resin such as a polyethylene terephthalate, a polybutylene terephthalate, a polytrimethylene terephthalate, a polylactic acid, acrylic fibers formed from an acrylic resin, and various heat-resistant fibers. These fibers may be used singly or in combination of two or more.

Further, from the viewpoint of improving the collection performance, the fibers constituting the fiber sheet for the substrate layer may contain hydrophobic fibers in a proportion of 90% by mass or more, more preferably 95% by mass or more, still more preferably 99% by mass or more, or particularly preferably consisting essentially of hydrophobic fibers. It should be noted that the hydrophobic fiber herein means a fiber poor in hygroscopicity.

Among these fibers, one includes polyolefin-based fibers, polyester-based fibers, acrylic-based fibers, heat-resistant fibers, and composite fibers thereof.

The heat-resistant fibers constituting the fiber sheet for the substrate layer may be fibers comprising a heat-resistant polymer having a unit with a structure such as aromatic, heterocycle, sulfur-containing, and nitrogen-containing in the polymer molecule. The heat-resistant fibers include polyetheretherketone (PEEK) fibers, polyetherketone (PEK) fibers, polyetherketoneketone (PEKK) fibers, polyphenylene sulfide (PPS) fibers, aromatic polyamide fibers (for example, polyamide fibers comprising aliphatic diamine units and aromatic dicarboxylic acid units), aramid fibers (para-aramid fibers, meta-aramid fiber), polyimide (PI)-based fibers, polyetherimide (PEI) fibers, polyamideimide fibers, amorphous polyarylate fibers, liquid crystal polyester fibers, polybenzoxazole (PBO) fibers, polybenzoimidazole (PBI) fibers, polybenzothiazole fibers, polytetrafluoroethylene (PTFE) fibers, melamine fibers, novoloid fibers, and the like. These fibers may be used singly or in combination of two or more.

Among these fibers, from viewpoints of melt-spinnability and heat resistance, preferred fibers may include liquid crystal polyester fibers, polyether imide fibers, polyphenylene sulfide fibers, semi-aromatic polyamide fibers (for example, semi-aromatic polyamide fibers comprising terephthalic acid unit as the dicarboxylic acid unit and 1,9-nonandiamine unit and/or 2-methyl-1,8-octanediamine unit as the diamine unit), and others.

Liquid Crystal Polyester Fiber

Liquid crystal polyester fiber (sometimes referred to as polyarylate-series liquid crystal resin fiber) is a fiber that can be obtained by spinning of liquid crystal polymer (LCP), for example, melt-spinning liquid crystal polyester. The liquid crystal polyester comprises repeating structural units originating from, for example, aromatic diols, aromatic dicarboxylic acids, aromatic hydroxycarboxylic acids, etc. As long as the effect of the present invention is not spoiled, the repeating structural units originating from aromatic diols, aromatic dicarboxylic acids, and aromatic hydroxycarboxylic acids are not limited to a specific chemical composition. The liquid crystal polyester may include the structural units

originating from aromatic diamines, aromatic hydroxy amines, or aromatic aminocarboxylic acids in the range which does not spoil the effect of the present invention. For example, the preferable structural units may include units shown in Table 1.

Table 1

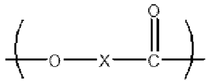 , 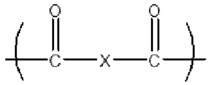 , 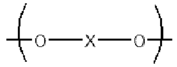 , 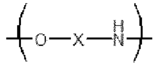

In the formula, X is selected from the following structures.

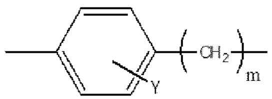 , 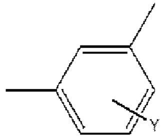 , 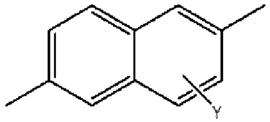 ,

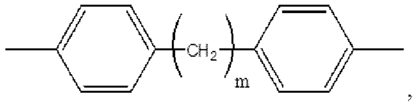 , 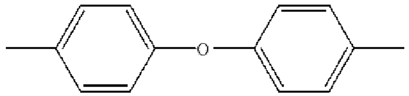 , ,

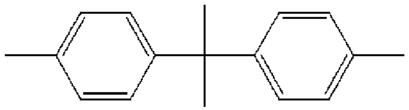 , 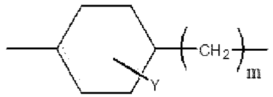 , 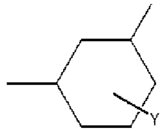

m is an integer from 0 to 2, Y is a substituent selected from hydrogen atom, halogen atoms, aryl groups, aralkyl groups, alkoxy groups, aryloxy groups, aralkyloxy groups.

Y independently represents, as from one substituent to the number of substituents in the range of the replaceable maximum number of aromatic ring, a hydrogen atom, a halogen atom (for example, fluorine atom, chlorine atom, bromine atom and iodine atom), an alkyl group (for example, an alkyl group having 1 to 4 carbon atoms such as methyl group, ethyl group, isopropyl group and t-butyl group), an alkoxy group (for example, methoxy group, ethoxy group, isopropoxy group, n-butoxy group, etc.), an aryl group (for example, phenyl group, naphthyl group, etc.), an aralkyl group [benzyl group (phenylmethyl group), phenethyl group (phenylethyl group)], an aryloxy group (for example, phenoxy group etc.), an aralkyloxy group (for example, benzyloxy group etc.), and others.

As more preferable structural units, there may be mentioned structural units as described in Examples (1) to (18) shown in the following Tables 2, 3, and 4. It should be noted that where the structural unit in the formula is a structural unit which can show a plurality of structures, combination of two or more units may be used as structural units for a polymer.

Table 2

| | |
|---|---|
| (1) | 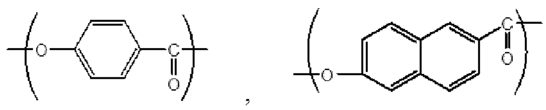 |
| (2) | 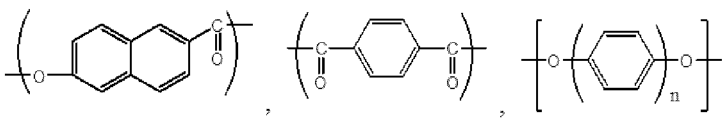 |
| (3) | 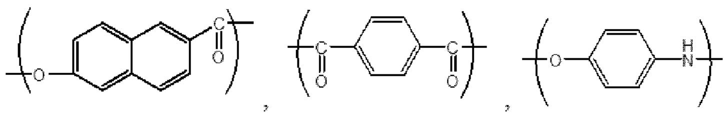 |
| (4) | 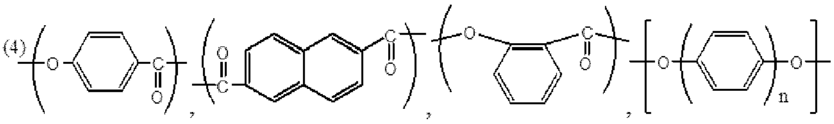 |
| (5) | 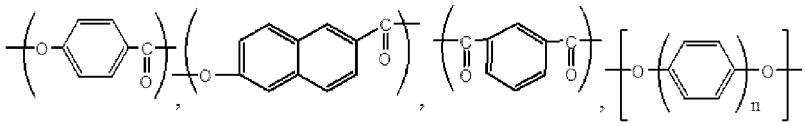 |
| (6) | 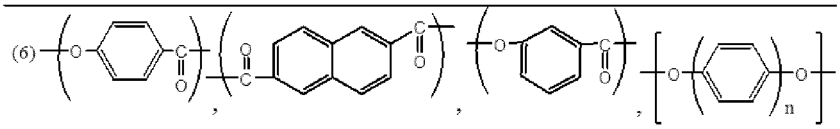 |
| (7) | 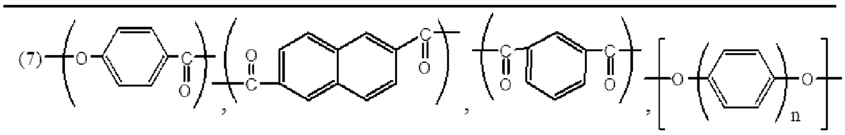 |
| (8) | 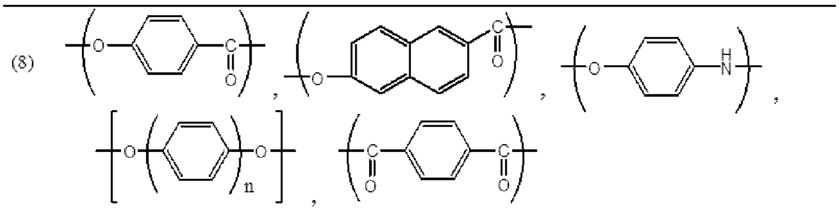 |

Table 3

| | |
|---|---|
| (9) | 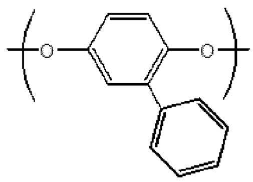 , 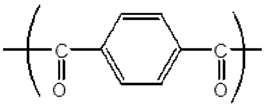 |
| (10) | 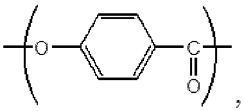 , 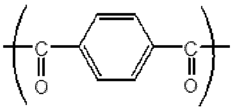 , 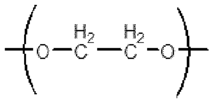 |
| (11) | 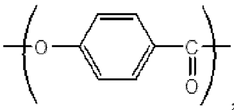 , 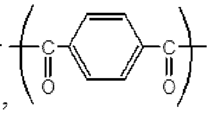 , 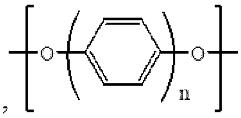 , 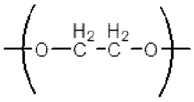 |
| (12) | 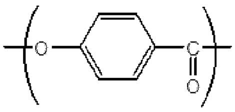 , 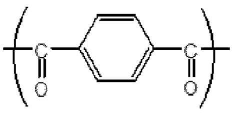 , 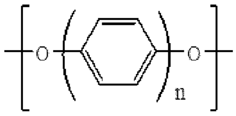 |
| (13) | 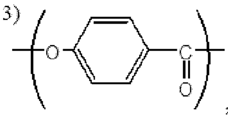 , 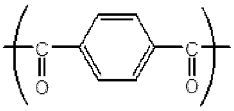 , 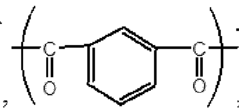 , 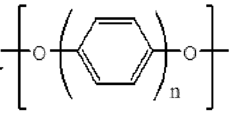 |
| (14) | 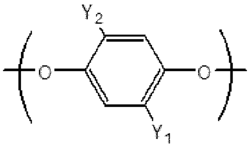 , 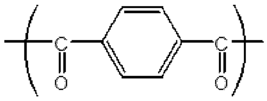 , 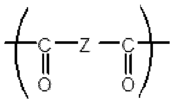 |
| (15) | 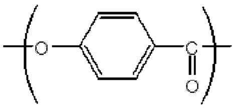 , 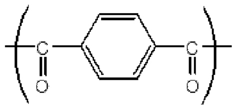 , 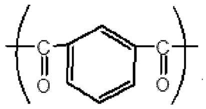 , 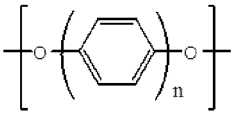 , 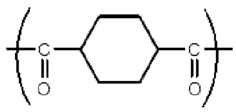 |

Table 4

| | |
|---|---|
| (16) | 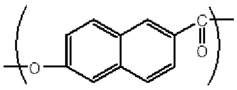, 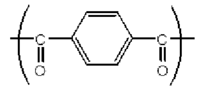, 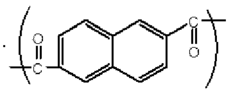, 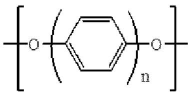 |
| (17) | 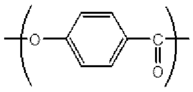, 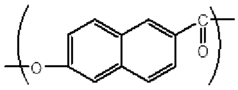, 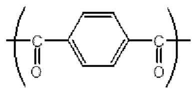, 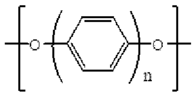 |
| (18) | 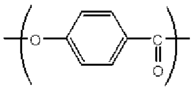, 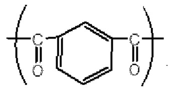, 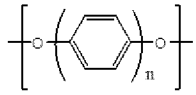 |

In the structural units shown in Tables 2, 3, and 4, n is an integer of 1 or 2, among each of the structural units, n = 1 and n = 2 may independently exist, or may exist in combination; each of the Y1 and Y2 independently represents, hydrogen atom, a halogen atom, (for example, fluorine atom, chlorine atom, bromine atom, iodine atom, etc.), an alkyl group (for example, an alkyl group having 1 to 4 carbon atoms such as methyl group, ethyl group, isopropyl group, and t-butyl group, etc.), an alkoxy group (for example, methoxy group, ethoxy group, and isopropoxy group, n-butoxy group, etc.), an aryl group (for example, phenyl group, naphthyl group, etc.), an aralkyl group [benzyl group (phenylmethyl group), phenethyl group (phenylethyl group), etc.], an aryloxy group (for example, phenoxy group etc.), an aralkyloxy group (for example, benzyloxy group etc.), and others. Among these, the preferable Y may include a hydrogen atom, a chlorine atom, a bromine atom, and methyl group.

Z may include substitutional groups denoted by following formulae.

Chem. 1

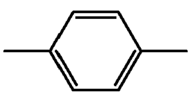, 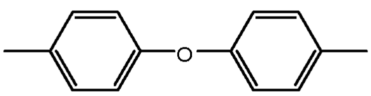, 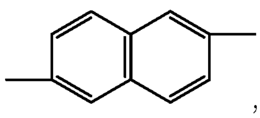,

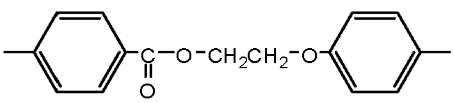, 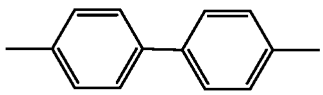

Preferable liquid crystal polyesters may comprise a combination of a structural unit having a naphthalene skeleton. Especially preferable one may include both the structural unit (A) derived from hydroxybenzoic acid and the structural unit (B) derived from hydroxy naphthoic acid. For example, the structural unit (A) may have a following formula (A), and the structural unit (B) may have a following formula (B). From the viewpoint of improvement in melt-spinnability, the ratio of the structural unit (A) and the structural unit (B) may be in a range of former/latter of from 9/1 to 1/1, more preferably from 7/1 to 1/1, still preferably from 5/1 to 1/1.

Chem. 2

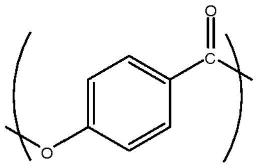

··· (A)

Chem. 3

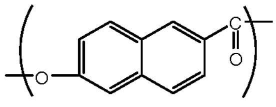

··· (B)

The total proportion of the structural units of (A) and (B) may be, based on all the structural units, for example, greater than or equal to 65 mol %, more preferably greater than or equal to 70 mol %, and still more preferably greater than or equal to 80 mol %. The liquid crystal polyester having the structural unit (B) at a proportion of from 4 to 45 mol % is especially preferred among polymers.

Further, as the constitution of liquid crystal polyester (polyarylate-series liquid crystal resin) for forming liquid crystal polyester fibers, a constitution comprising para-hydroxybenzoic acid and 2-hydroxy-6-naphthoic acid as the main components, or a constitution comprising para-hydroxybenzoic acid, 2-hydroxy 6-naphthoic acid, terephthalic acid, and biphenol as the main components are preferred.

The liquid crystal polyester may preferably have a melt-viscosity at 310°C of lower than or equal to 20 Pa s or less from the viewpoint of reduced oligomer generation at the time of polymerization as well as facilitation of finer fiber formation. In view of easier spinnability, liquid crystal polyester may preferably have a melt-viscosity at 310°C of higher than or equal to 5 Pa·s.

The liquid crystal polyester suitably used in the present invention preferably has a melting point of in the range from 250 to 360°C, and more preferably from 260 to 320°C. The melting point here means a main absorption peak temperature measured and observed in accordance with JIS K7121 examining method using a differential scanning calorimeter (DSC; "TA3000" produced by Mettler). More concretely, after taking 10 to 20 mg of a sample into the above-mentioned DSC apparatus to enclose the sample in an aluminum pan, nitrogen as carrier gas is introduced at a flow rate of 100 cc/minute and a heating rate of 20°C/minute, the position of an appearing endothermic peak is measured. In some kinds of polymer, where a clear peak does not appear in the first run in the DSC measurement, after heating the sample to a temperature 50°C higher than the flow temperature expected with a heating rate of 50°C/minute so as to make the sample to be completely molten for 3 minutes, and the melt is quenched to 50°C at a rate of -80°C/minute. Subsequently, the quenched material is reheated at a heating rate of 20°C/minute, and the position of an appearing endothermic peak may be recorded.

As the liquid crystal polyester, there may be exemplified a fully aromatic polyester capable of forming liquid crystal in melt phase which comprises a copolymerization product of para-hydroxybenzoic acid and 6-hydroxy 2-naphthoic acid ("Vectra L type" produced by Polyplastics, Inc.).

Polyetherimide Fiber

Polyetherimide fibers can be obtained by melt-spinning polyether imide polymer (PEI). The polyetherimide may comprise an ether unit of aliphatic unit, alicycle unit, or aromatic unit and a cyclic imide unit as repeating structural units. As long as the effect of the present invention is not spoiled, the main chain of the polyetherimide polymer may comprise a structure unit(s) other than cyclic imide unit and the ether bond unit. The structure unit(s) may include, for example, an aliphatic ester unit, an alicycle ester unit, or an aromatic ester unit, an oxycarbonyl unit, and others. The polyetherimide may be crystalline or amorphous, and preferably an amorphous polymer.

The polyetherimide polymer may be a polymer comprising a combination of repeating structural units as shown in the general formula below. In the formula, R1 represents a divalent aromatic residue having 6 to 30 carbon atoms; R2 represents a divalent organic group selected from the group consisting of a divalent aromatic residue having 6 to 30 carbon atoms, an alkylene group having 2 to 20 carbon atoms, a cycloalkylene group having 2 to 20 carbon atoms, and a polydiorganosiloxane group in which the chain is terminated by an alkylene group having 2 to 8 carbon atoms.

Chem. 4

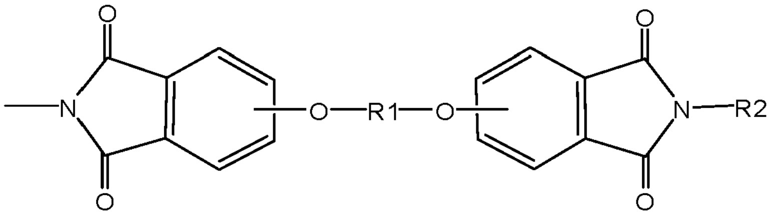

The preferable R1 and R2 include, for example, an aromatic residue and an alkylene group (e.g., m = 2 to 10) shown in the following formulae.

Chem. 5

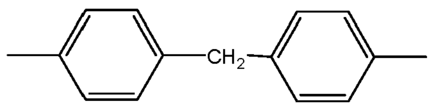

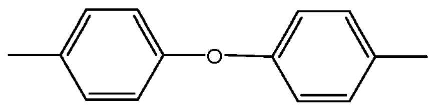

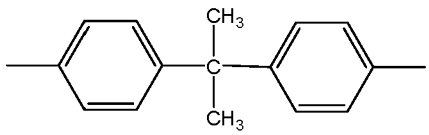

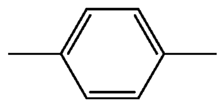

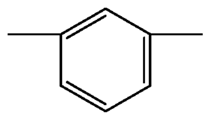

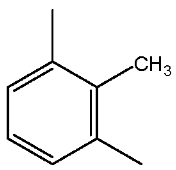

$-(CH_2)_m-$

In the present invention, from the viewpoint of melt-spinnability and cost reduction, a preferable polymer may include a condensate of 2,2-bis-4-(2,3-dicarboxyphenoxy)phenyl]propane dianhydride and m-phenylenediamine, having a structural unit shown by the following formula as a main constituent. Such a polyetherimide is available from SABIC Innovative Plastics Holding under the trademark of "ULTEM".

Chem. 6

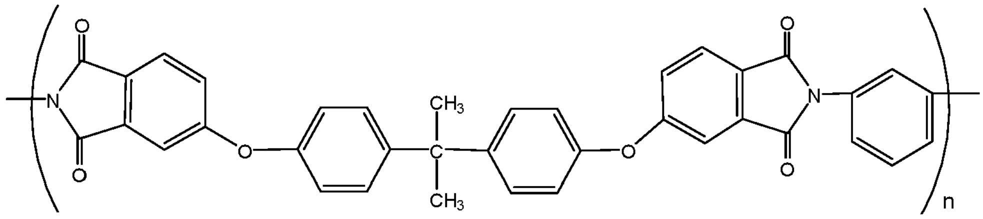

The resin forming a polyetherimide fiber may preferably contain a polymer having a unit represented by the above general formula at a proportion of greater than or equal to 50 mass %, more preferably greater than or equal to

80 mass %, still more preferably greater than or equal to 90 mass %, and particularly preferably greater than or equal to 95 mass %.

As the preferable polyetherimide, there may be used an amorphous polyetherimide having a melt viscosity of 900 Pa s at a shear rate of 1200 $sec^{-1}$ at a temperature of 330°C using a capilograph 1B produced by Toyo Seiki Seisakusho, Ltd.

Polyphenylene Sulfide Fiber

Polyphenylene sulfide fibers can be obtained by melt-spinning polyarylene sulfide. The polyarylene sulfide may comprise a repeating structural unit of arylene sulfide represented by -Ar-S- (Ar is an arylene group). The arylene group may include p-phenylene, m-phenylene, naphthylene groups or others. From the viewpoint of heat resistance, preferable repeating structural unit may be p-phenylene sulfide.

The resin forming the polyphenylene sulfide fibers may preferably contain a polymer having an arylene sulfide repeating structural unit at a proportion of greater than or equal to 50 mass % based on the resin, more preferably greater than or equal to 80 mass %, still more preferably greater than or equal to 90 mass %.

The fiber may be a non-composite fiber, or a composite fiber (a core-sheath type composite fiber, a sea-island type composite fiber, a side-by-side type composite fiber, etc.). Where the fibers are composite fibers, preferable one may include composite fibers in which a low-melting-point resin is used as one component (for example, a sheath component, a sea component, etc.) and a high-melting-point resin is used as another component (for example, a core component, an island component). The low-melting-point resin and the high-melting-point resin can be appropriately selected from the above-mentioned resins capable of forming fibers depending on the treatment temperature of the thermal bonding.

From the viewpoint of handleability, the fiber sheet for the substrate layer may have a basis weight (a basis weight for a single layer) of, for example, about 10 to 150 $g/m^2$, preferably about 12 to 130 $g/m^2$, and more preferably about 15 to 100 $g/m^2$. The basis weight of the fiber sheet for the substrate layer is a value measured in accordance with the method described in Examples described later.

The fiber sheet for the substrate layer may have an apparent density (apparent density for a single layer) of, for example, about 0.05 to 0.35 $g/cm^3$, preferably about 0.06 to 0.25 $g/cm^3$, and more preferably about 0.07 to 0.20 $g/cm^3$. The apparent density of the fiber sheet for the substrate layer is a value measured in accordance with the method described in Examples described later.

The fiber sheet for the substrate layer may have a thickness (thickness for a single layer) of, for example, about 0.20 to 1.00 mm, preferably about 0.25 to 0.90 mm, and more preferably about 0.30 to 0.80 mm. The thickness of the fiber sheet for the substrate layer is a value measured in accordance with the method described in Examples described later.

Fiber Sheet for Extra-Fine Fiber Layer

The fiber sheet for extra-fine fiber layer comprises extra-fine fibers and has an apparent density of 0.05 to 0.35 $g/cm^3$. The fiber sheet for the extra-fine fiber layer having such an apparent density is overlaid on a fiber sheet for the substrate layer and the overlaid material is subjected to entangling process so that the extra-fine fibers are entangled with respect to the substrate layer not only in the thickness direction but also in the crosswise direction. As a result, the extra-fine fiber layer and the substrate layer can be integrated into a deep level. The fiber sheet for the extra-fine fiber layer may have an apparent density (apparent density for a single layer) of preferably 0.06 to 0.30 $g/cm^3$, and more preferably 0.07 to 0.25 $g/cm^3$. The apparent density of the fiber sheet for the extra-fine fiber layer is a value measured in accordance with the method described in Examples described later.

From the viewpoint of achieving integration between layers into a deep level while retaining handleability, the fiber sheet for the extra-fine fiber layer has a strength (N/5 cm) at 10% elongation of, for example, about 0.10 to 1.00 (N/5 cm), preferably about 0.12 to 0.90 (N/5 cm), and more preferably about 0.15 to 0.70 (N/5 cm) based on basis weight ($g/m^2$) of the fiber sheet for the extra-fine fiber layer. The strength at 10% elongation of the fiber sheet for the extra-fine fiber layer based on the basis weight is a value measured by the method described in Examples described later.

The fiber sheet for the extra-fine fiber layer is a nonwoven fabric from the viewpoint of handleability of the extra-fine fibers.

As the fiber sheet for the extra-fine fiber layer, there may be mentioned meltblown nonwoven fabrics, electrospun nonwoven fabric, and split fiber fabrics (extra-fine fiber fabric obtained from a fabric composed of bundle of fibers of different components by splitting the fibers at interface of the different components), sea-island fiber-derived nonwoven fabrics (extra-fine fiber fabric obtained from a fabric composed of sea-island fibers by eluting the sea components from the fabric), fibrillated nonwoven fabrics (extra-fine fiber fabric obtained from a fabric by giving physical impacts to make fibers to be fibrillated), and others. From the viewpoint of handleability, meltblown nonwoven fabrics may be preferably

used.

The meltblown nonwoven fabric can be obtained by a meltblowing process in which a molten thermoplastic polymer is extruded from a spinneret with hot air injection so as to obtain a fiber web by thinning the extruded material into a fibrous form while bonding with each other by means of self-fusion characteristics.

The fibers constituting the fiber sheet for the extra-fine fiber layer can be appropriately selected depending on the production method, and preferable fibers may include synthetic fibers. Examples of the synthetic fiber-formable resin may include a polystyrenic resin, a polyolefinic resin, an acrylic resin, a polyvinyl alcohol-based resin, a polyvinyl chloride-based resin, a polyvinylidene chloride-based resin, a polyurethane-based resin, a polyester-based resin, a polyether-based resin, a polyamide-based resins, heat-resistant resins constituting heat-resistant fibers used in the above-mentioned substrate layer, a thermoplastic elastomer, and others. These resins may be used singly or in combination of two or more.

As the heat-resistant resins, there may be mentioned, from viewpoints of melt-spinnability and heat resistance, a liquid crystal polyester, a polyether imide, a polyphenylene sulfide, a semi-aromatic polyamide (for example, semi-aromatic polyamide comprising terephthalic acid unit as the dicarboxylic acid unit and 1,9-nonandiamine unit and/or 2-methyl-1,8-octanediamine unit as the diamine unit), and others.

From the viewpoint of handleability, the fiber sheet for the extra-fine fiber layer may have a basis weight (basis weight for a single layer) of, for example, about 4.0 to 30 g/m$^2$, preferably about 4.5 to 25 g/m$^2$, more preferably about 5.0 to 20 g/m$^2$. The basis weight of the fiber sheet for the extra-fine fiber layer is a value measured in accordance with the method described in Examples described later.

The fiber sheet for the extra-fine fiber layer may have an apparent density (apparent density for a single layer) of, for example, about 0.05 to 0.35 g/cm$^3$, preferably about 0.07 to 0.25 g/cm$^3$, and more preferably about 0.08 to 0.20 g/cm$^3$. The apparent density of the fiber sheet for the extra-fine fiber layer is a value measured in accordance with the method described in Examples described later.

The fiber sheet for the extra-fine fiber layer may have a thickness (thickness for a single layer) of, for example, about 0.05 to 0.30 mm, preferably about 0.06 to 0.25 mm, and more preferably about 0.07 to 0.20 mm. The thickness of the fiber sheet for the extra-fine fiber layer is a value measured in accordance with the method described in Examples described later.

Entangling Process

The entangling process is not particularly limited to a specific one as long as the extra-fine fiber layer is not eradicated by entangling process into a deep level, and a hydroentangling (spunlace) method, a needlepunching method, or the like can be used as the entangling process. The hydroentangling method is preferably used from the viewpoint of retaining a surface layer of the extra-fine fiber layer in a continuous state in the plane direction as well as integrating the extra-fine fiber layer and the substrate layer into a deep level in an efficient way.

For example, in the hydroentangling method, onto a fiber sheet comprising an extra-fine fiber layer and a substrate layer overlaid on the extra-fine fiber layer, the fiber sheet being placed on a porous support, are injected high pressure water jets (curtains) from a nozzle having fine holes, then the water jets passing through the fiber sheet hit on the support so as to be reflected to the fiber sheet. The reciprocal water jets give the energy to fibers in the fiber sheet to be entangled.

That is, according to the present invention, the entangle treatment can achieve a specific structure in which some of the extra-fine fibers constituting the extra-fine fiber layer are pushed between fibers constituting the substrate layer not only into the thickness direction but also into the width (plane) direction of the substrate layer, probably because a sheet for the extra-fine fiber layer having an apparent density of unexpectedly small size is adopted to be entangled and integrated with a substrate layer. As a result, it is possible to integrate the extra-fine fiber layer and the substrate layer into a deep level, which has not been conventionally expected, resulting in improvement in collection efficiency while suppressing the pressure loss.

The type of the porous support may be either a drum type or a plate type, or a combination of these. Preferable one to be used is a plate type porous support. The porous support may have an aperture ratio of, for example, 10 to 50%, preferably 15 to 40%, and more preferably about 20 to 30%. The porous support may have a hole size of, for example, 0.01 to 5.0 mm, preferably 0.05 to 3.0 mm, and more preferably about 0.1 to 1.0 mm.

The water pressure of the water jets can be appropriately set depending on the thickness of the fiber structure, and the like, and may be, for example, 1.6 to 10 MPa, preferably 2 to 9.5 MPa, and more preferably about 3 to 9 MPa.

The diameter of each of the fine holes in the nozzle used for injecting the water jets may be, for example, about 0.05 to 0.2 mm. The distance between the fine holes in the nozzle may be, for example, 0.3 to 5.0 mm, preferably 0.4 to 3.0 mm, and more preferably 0.5 to 2.0 mm. The number of rows in the nozzle arranged is, for example, one or two rows, and one row is preferred from the viewpoint of optimizing of deep integration degree between the extra-fine fiber layer and the substrate layer, of suppressing further pressure loss, and of enhancing collection efficiency.

In the deep integration between the extra-fine fiber layer and the substrate layer, it is preferred that a stacked fiber sheet in which the extra-fine fiber layer and the substrate layer are stacked with each other is placed on the porous support; and the stacked fiber sheet on the porous support is continuously conveyed in a longitudinal direction of the fiber sheet at a constant speed to be subject to the entangling treatment in the conditions described above. The moving speed of the fiber sheet may be, for example, 1.0 to 10.0 m/min, preferably 2.0 to 9.0 m/min, and more preferably 3.0 to 8.0 m/min. By adjusting the moving speed of the fiber sheet within the above range, optimization of the integration level between the extra-fine fiber layer and the substrate layer can be achieved while suppressing a pressure loss of the obtained fiber structure as well as further improving a collection efficiency.

If necessary, the entangled fiber structure may be further subjected to thermal bonding so as to increase the strength of the nonwoven fabric.

Further, the fiber structure may be subjected to an electret treatment to improve the collection efficiency. The electret treatment may be performed on a fiber sheet before the entangling process, or may be performed on a fiber structure after the entangling process. Further, the electret treatment may be performed on a fiber sheet subjected to thermal bonding.

The electret treatment is not particularly limited to a specific one as long as the electret treatment can provide a fiber sheet with electret charge, and examples thereof include a corona discharge treatment and a hydrocharge treatment. Hydrocharge treatment includes a method of spraying a jet of water or a stream of water droplets at a pressure sufficient for water to penetrate into the fiber sheet; a method of providing water to a fiber sheet and sucking the provided water from one side of the fiber sheet during or after the providing procedure so as for water to penetrate into the fiber sheet; a method of immersing a fiber sheet with a mixed solution of water and a water-soluble organic solvent such as isopropyl alcohol, ethyl alcohol and acetone so as for water to penetrate into the fiber sheet; and others.

Fiber Structure

The fiber structure according to the present invention is a fiber structure comprising an extra-fine fiber layer spreading in a plane direction, and a substrate layer adjoining the extra-fine fiber layer; wherein the extra-fine fiber layer comprises extra-fine fibers having a number average single fiber diameter of 5 μm or less; the substrate layer comprises non-extra-fine fibers having a number average single fiber diameter of 7 μm or more; in a cross section along a thickness direction of fiber structure, the substrate layer contains mixture portions in each of which some of the extra-fine fibers pushed (shoved) between the non-extra-fine fibers are widened in a crosswise direction; and where the substrate layer is equally divided into three segments and each of the segments is denoted sequentially from the extra-fine fiber layer side as a proximal region, a central region, and a distal region, at least a part of the pushed extra-fine fibers reach the distal region. From the viewpoint of enhancing the collection efficiency, it is preferred that the extra-fine fiber layer continuously spreads in the plane direction in a state that the extra-fine fiber layer is adjoining the substrate layer.

Fig. 1 is an enlarged photograph showing a cross section of the thickness direction of the fiber structure according to an embodiment of the present invention. As shown in Fig. 1, the fiber structure according to one embodiment comprises an extra-fine fiber layer 10 containing extra-fine fibers having a number average single fiber diameter of 5 μm or less and a substrate layer 20 containing non-extra-fine fibers having a number average single fiber diameter of 7 μm or more. In Fig. 1, the extra-fine fiber layer 10 is adjoining the substrate layer 20 in a state that the extra-fine fiber layer 10 spreads in a plane direction. From Fig. 1, it can be confirmed that the extra-fine fiber layer 10 is arranged onto the substrate layer 20, and the extra-fine fiber layer 10 is adjoining on the substrate layer 20 in a state that the extra-fine fiber layer 10 continuously spreads without rupture.

It should be noted that in the present invention, although the extra-fine fibers constituting the extra-fine fiber layer can be usually easily distinguished from the non-extra-fine fibers constituting the substrate layer on the cross section of the fiber structure as shown in Fig. 1, it is also acceptable that a fiber having a fiber diameter of less than 6 μm may be determined as an extra-fine fiber, while a fiber having a fiber diameter of 6 μm or more may be determined as a non-extra-fine fiber.

In Fig. 1, the thickness direction of the substrate layer is indicated by an arrow Y, and the crosswise direction of the substrate layer is indicated by an arrow X. Where an uppermost non-extra-fine fiber 22 and a lowermost non-extra-fine fiber 24 of the non-extra-fine fibers constituting the substrate layer 20 have positions of upper end and lower end, respectively, the substrate layer 20 in Fig. 1 has a thickness from the upper end to the lower end in the Y direction, and the thickness is equally divided into three regions, starting from the side of the extra-fine fiber layer 10, a proximal region P, a central region C, and a distal region D.

It should be noted that at the determination of the thickness of the substrate layer, the upper end and the lower end of the substrate layer can be determined by means of either a cross section of an uppermost or lowermost non-extra-fine fiber or an upper or lower peak of a curved portion of an uppermost or lowermost non-extra-fine fiber. For example, in Fig. 1, determination of the upper and lower end of the substrate layer 20 in the Y direction can be carried out by using the cross section of the non-extra-fine fibers 22 for the upper end, and the lower peak of the curved portion

of the non-extra-fine fibers 24 for the lower end.

As shown in FIGS. 1 and 2, at least a part of the extra-fine fibers 14 are pushed (shoved) between the non-extra-fine fibers constituting the substrate layer 20. The pushed extra-fine fibers 14 are independently pushed from unpushed extra-fine fibers 14 without affecting the unpushed extra-fine fiber structure in a state as being pushed between the non-extra-fine fibers. Moreover, the pushed extra-fine fibers 14 may include a portion in which extra-fine fibers are standing in a row like a bundle. That is, a mixture portion 12 may include a bundle-shaped portion in which the extra-fine fibers 14 are pushed from the extra-fine fiber layer 10 into the substrate layer 20 so as to have a bundle shape. It should be noted that the mixture portion 12 may further include extra-fine fibers 14 extending from the bundle-shaped portion as an extended part.

For example, in Fig. 1, at least in the central region C, the extra-fine fibers 14 constitute a mixture portion 12, and the mixture portion 12 extends in the crosswise direction (X direction) in the substrate layer 20. The extra-fine fibers 14 forming the mixture portion 12 have a portion 16 that widens in a bundle shape in a substantial Y direction, and a portion 17 that widens in a bundle shape in a substantial X direction. Here, the substantial Y direction and the substantial X direction may be a direction in a range of ± 30° in each direction.

In Fig. 1, the mixture portion 12 containing the extra-fine fibers 14 is penetrated through a boundary line L between the central region C and the distal region D and has a width W in the crosswise direction (X direction) defined along a boundary line L. In other words, the mixture portion 12 containing the extra-fine fibers 14 is provided along the crosswise direction (X direction) in a range of at least the width W along the boundary line L as described later. Further, the mixture portion 12 also contains a single number or a small number (about 2 to 10) of extra-fine fibers (for example, a plurality of extra-fine fibers 14) derived from the bundle-shaped portion to reach the distal region D of the substrate layer 20. At least a part of the pushed extra-fine fibers 14 (for example, the extra-fine fibers 14) reach the distal region D of the substrate layer 20 in the thickness direction (Y direction). That is, the extra-fine fibers 14 pushed from the extra-fine fiber layer 10 can spread into the substrate layer 20 not only in the thickness direction (Y direction) but also in the crosswise direction (X direction) so that the extra-fine fiber layer 10 can be deeply entangled with the substrate layer 20 to achieve integration into a deep level. It should be noted that, for example, in Fig. 1, there is no "mixture portion" in the proximal region P. Although the extra-fine fibers 14 are present in the proximal region P, the extra-fine fibers 14 in the proximal region P do not satisfy the definition of "mixture portion" because the extra-fine fibers 14 do not exist in the predetermined crosswise direction (X direction). As an alternative, there may be a "mixture portion" in the proximal region P.

The fiber structure according to the present invention may comprise a mixture portion(s) 12 in any of the proximal region P, the central region C, and the distal region D. In particular, the mixture portion(s) 12 preferably exists in at least one of the central region C and the distal region D.

Further, in the mixture portion 12, where each of the mixture portions has a width W defined by a widest distance between extra-fine fibers 14 configuring one end and the other end of the mixture portion at the points where both extra-fine fibers intersect with a boundary line L between the central region C and the distal region D, the average value of the width W may be, for example, 120 $\mu$m or more, preferably about 120 to 500 $\mu$m, more preferably about 150 to 400 $\mu$m, and further preferably about 160 to 350 $\mu$m. Here, the average value of the width W is a value measured by the method described in Examples described later.

Further, at least a part of the pushed extra-fine fibers 14 reaches the distal region D of the substrate layer 20. The part of the pushed extra-fine fibers 14 may reach the distal region D, for example, derived from the mixture portion 12. Alternatively, the part of the pushed extra-fine fibers 14 may reach the distal region D directly from the extra-fine fiber layer 10 without being derived from the mixture portion 12. From the viewpoint of deep integration, some of the extra-fine fibers 14 derived from the mixture portion 12 may preferably reach the distal region D.

Further, the extra-fine fibers 14 may exist in the proximal region P, the central region C, and the distal region D, and the extra-fine fibers 14 may exist in the distal region D, for example, 1 to 20%, and preferably 2 to 18%. The extra-fine fibers 14 may exist in the central region, for example, 1 to 40%, and preferably 2 to 35%.

In a particularly preferable embodiment, the extra-fine fibers 14 may exist in the distal region D, for example, 1 to 20% (preferably 2 to 18%), and have a fiber width W of about 150 to 400 $\mu$m (preferably 160 to 350 $\mu$m) so as for the fiber structure to enhance the collection efficiency while suppressing the pressure loss.

Although Figs. 1 and 2 show an entangled product of one extra-fine fiber layer 10 and one substrate layer 20, the fiber structure according to the present invention may be an entangled product of one or more extra-fine fibers layers and one or more substrate layers. In such a fiber structure, the extra-fine fiber layer and the substrate layer may be placed alternately.

For example, where extra-fine fiber layers are arranged at upper and lower sides of a substrate layer, the extra-fine fiber layer in the upper side and/or the extra-fine fiber layer in the lower side may form a mixture portion(s) in the substrate layer. At least one of the extra-fine fiber layers may cause extra-fine fibers pushed thereof into the substrate layer so as to reach a distal region with respect to the extra-fine fiber layer causing pushed extra-fine fibers. Alternatively, where substrate layers are arranged at upper and lower sides of an extra-fine fiber layer, extra-fine fibers from the extra-fine fiber layer may cause a mixture portion in at least one of the substrate layers.

The extra-fine fibers constituting the extra-fine fiber layer of the fiber structure have a number average single fiber diameter of 5 μm or less, and may preferably have a number average single fiber diameter of 4.8 μm or less, more preferably of 4.5 μm or less. The lower limit of the number average single fiber diameter is not particularly limited to a specific one, and may be about 0.5 μm from the viewpoint of handleability. The number average fiber diameter of the single fiber is a value measured by the method described in Examples described later.

Further, the extra-fine fibers constituting the extra-fine fiber layer of the fiber structure have a single fiber diameter of less than 6 μm, and may preferably have a single fiber diameter of 5.5 μm or less, more preferably 5 μm or less. The lower limit of the single fiber diameter is not particularly limited to a specific one, and may be about 0.1 μm from the viewpoint of handle ability. The single fiber diameter is a fiber diameter of each of the fibers measured when measuring the number average fiber diameter, and the number average fiber diameter is a value measured by the method described in Examples described later.

On the other hand, the non-extra-fine fibers constituting the substrate layer of the fiber structure have a number average single fiber diameter of 7 μm or more, and may preferably have a number average single fiber diameter exceeding 7 μm, and more preferably 10 μm or more. The upper limit of the number average single fiber diameter is not particularly limited to a specific one, and may be about 40 μm from the viewpoint of easy compounding with extra-fine fibers. The number average single fiber diameter is a value measured by the method described in Examples described later.

The non-extra-fine fibers constituting the substrate layer of the fiber structure have a single fiber diameter of 6 μm or more, and may preferably have a single fiber diameter of 7 μm or more, and more preferably 8 μm or more. The upper limit of the fiber diameter of the single fiber is not particularly limited to a specific one, and may be about 50 μm from the viewpoint of handle ability. The single fiber diameter is a fiber diameter of each of the fibers measured when measuring the number average fiber diameter, and the number average fiber diameter is a value measured by the method described in Examples described later.

Further, the non-extra-fine fibers may contain fibers having different fiber diameters with each other, for example, with a difference of about 2 to 15 μm (preferably about 3 to 10 μm) from the viewpoint of maintaining the collection efficiency while reducing the pressure loss.

From the viewpoint of improving entanglement between fibers, the ratio of the number average fiber diameter of the extra-fine fibers constituting the extra-fine fiber layer to the number average fiber diameter of the non-extra-fine fibers constituting the substrate layer, i.e., a ratio of (extra-fine fibers) / (Non-extra-fine fiber) may be, for example, 0.09 to 0.30, preferably 0.10 to 0.28, and more preferably 0.11 to 0.25.

It should be noted that, in the fiber structure, the density of the extra-fine fibers excluding the non-extra-fine fibers, i.e., the density of the extra-fine fibers alone based on the fiber structure, may be 0.1 $g/cm^3$ or less, preferably about 0.01 to 0.05 $g/cm^3$, and more preferably about 0.015 to 0.04 $g/cm^3$ from the viewpoint of reducing pressure loss. The density of the extra-fine fibers based on the fiber structure is a value measured by the method described in Examples described later.

The basis weight of the fiber structure is appropriately set depending on the intended use, and is 20 to 180 $g/m^2$, preferably about 25 to 150 $g/m^2$, and more preferably about 30 to 120 $g/m^2$.

Where the fiber structure has heat resistance because of heat-resistant fibers contained in the fiber structure, the fiber structure is, for example, in a state that fibers in the fiber structure are not completely molten after being heated at 200°C for 3 hours, and preferably in a state that fibers in the fiber structure are retaining fiber forms after being heated at 200°C for 3 hours

Further, although the fiber structure preferably has a collection efficiency (collection efficiency before heating) as high as possible, from the viewpoint of controlling the pressure loss within an appropriate range, the fiber structure has a collection efficiency of, for example, 70% or more (for example, 70% to 99.99%), preferably 75% or more, and more preferably 79% or more. Here, the collection efficiency is a value measured by the method described in Examples described later.

Where heat-resistant fibers constitute the fiber structure according to the present invention, such a fiber structure may have a collection efficiency (for example, collection efficiency after heating at 100°C) after heating (for example, after heating the fiber structure at 100 °C for 48 hours) of, for example, 70% or more (for example, 70% to 99.99%), preferably 75% or more, and more preferably 79% or more.

Where the fiber structure is exposed to heating, the fiber structure may have a retention rate of collection efficiency before and after heating of, for example, 75% or more, preferably 85% or more, and more preferably 90% or more.

The retention rate (%) of collection efficiency before and after heating can be calculated by the following formula by means of the above-described collection efficiencies before as well as after heating.

$$\text{(Collection efficiency after heating) / (Collection efficiency before heating)} \times 100$$

The fiber structure can have a pressure loss selected from, for example, in the range of 0 to 30 Pa depending on the intended use, and may have a pressure loss of, for example, about 0 to 10 Pa, preferably about 1 to 9.5 Pa, and more preferably about 2 to 9 Pa. Here, the pressure loss is a value measured by the method described in Examples described later.

The fiber structure may have a QF value calculated in accordance with the following formula based on the collection efficiency and the pressure loss, for example, 0.22 or more, preferably 0.25 or more, and more preferably 0.30 or more. The fiber structure preferably has a QF value as high as possible. Although the upper limit is not particularly limited to a specific one, the upper limit may be, for example, about 0.50.

$$\text{QF value} = -\ln(1 - \text{Collection efficiency (\%)}/100) / \text{Pressure loss (Pa)}$$

Where heat-resistant fibers constitute the fiber structure according to the present invention, the fiber structure may have a QF value after heating (for example, QF value after heating the fiber structure at 100°C for 48 hours) of, for example, 0.20 or more, preferably 0.22 or more, and more preferably 0.24 or more. The heat-resistant fiber structure preferably has a QF value as high as possible. Although the upper limit is not particularly limited to a specific one, the upper limit may be, for example, about 0.50.

Such a fiber structure can be suitably used as, for example, a filter (particularly an air filter) as its application. As the filter, there may be mentioned, for example, filters used for masks, various air conditioning elements, air purifiers, cabin filters, as well as filters used in various devices.

For example, the fiber structure according to the present invention may be used as a filter sheet for a mask. The fiber structure may be appropriately used as a mask filter sheet depending on the material of the fiber and the like. For example, the fiber structure may be used as an intermediate sheet arranged between the expiratory side sheet and the front side sheet.

It should be noted that according to the present invention, the mask refers to a mask that covers at least one of the mouth and nose (particularly nostrils) of a human body, regardless of the presence or absence of a fixing portion(s) such as a band(s) to be fixed to the face. Further, the mask may cover a part other than the mouth and nose of the human body. For example, as a modification, the mask according to the present invention may be a mask (for example, a nasal mask, a full-face mask, etc.) for treating sleep apnea syndrome used for CPAP therapy suitable for treating sleep apnea syndrome, NIPPV therapy suitable for treating ventilation failure.

Further, in the case of a heat-resistant fiber structure, the heat-resistant fiber structures can be suitably used as a filter (particularly an air filter, a bag filter, a liquid filter, etc.). Further, the heat-resistant fiber structures can be used for a variety of applications requiring heat resistance, for example, used for various transportation means required to have heat resistance, various air-conditioning elements, air purifiers, cabin filters, and filters used in various devices in addition to a heat-resistant mask.

## EXAMPLES

Hereinafter, the present invention will be described based on Examples, but the present invention is not limited to the present Examples. In the following Examples and Comparative Examples, various physical properties were measured by the following methods.

### Number Average Single Fiber Diameter

Each of the fiber structures was observed using a scanning electron microscope to obtain an electron micrograph. Fibers were randomly selected from the electron micrograph, and their diameters were measured to determine a number average fiber diameter of the target fibers. It should be noted that as for extra-fine fibers, fibers existing in the extra-fine fiber layer were selected for measuring their fiber diameters, and that as for non-extra-fine fibers, fibers that existed in the substrate layer and were not in the mixture portion were selected for measuring their fiber diameters.

### Thickness of Substrate Layer

In reference to 6.2 of JIS L 1913 "Test methods for nonwovens", thickness was measured. Specifically, a fiber structure or a fiber sheet was cut at ten cross sections by using a razor "Feather razor S-piece edge" produced by FEATHER Safety Razor Co., Ltd. Such ten cross sections were selected randomly and in parallel to the thickness

direction and perpendicular to the machine direction (MD) of the fiber structure or the fiber sheet, and each of the cross-sectional surfaces was observed using a digital microscope. Then, the upper end and the lower end of a substrate layer of the fiber structure was determined in each of the cross sections of the substrate layer by means of either a cross section of an uppermost or lowermost non-extra-fine fiber or an upper or lower peak of a curved portion of an uppermost or lowermost non-extra-fine fiber. Accordingly, the distance between the upper end and the lower end was measured as the thickness of the substrate layer in each of the cross sections, and an average of the measured values was calculated as a thickness (mm).

Width of Mixture Portion

In the cross sections obtained when measuring the thickness of the substrate layer, a width W of a mixture portion was defined as a widest distance between extra-fine fibers configuring one end and the other end of the mixture portion at the points where both extra-fine fibers intersect with a boundary line L between the central region C and the distal region D of the substrate layer. The width W in each of 10 cross sections randomly selected was obtained and the average value of these was calculated as the width (μm) of the mixture portion.

Existence proportion

The existence proportion of extra-fine fibers in the substrate layer was determined from each of the cross-sectional photographs obtained when measuring the thickness of the substrate layer, in which each of the cross sections were equally divided into three regions in the thickness direction, and an area occupied by the extra-fine fiber in each of the regions were measured and calculated as the occupied proportion in each of the regions.

Basis Weight and Apparent Density

According to 6.1 of JIS L 1913 "test method for nonwovens", the basis weight (g/$m^2$) was measured. The apparent density (g/$cm^3$) was calculated by dividing the basis weight by the thickness.

Strength at 10% Elongation per Basis Weight (g/$m^2$)

According to JIS L1913 6.3.2, the strength at 10% elongation (N/5 cm) was measured. Then, the strength at 10% elongation per basis weight (g/$m^2$) was calculated by dividing the obtained strength at 10% elongation (N/5 cm) by the basis weight.

Density of extra-fine fibers alone

The density of extra-fine fibers alone (g/$cm^3$) was calculated by dividing the basis weight of the extra-fine fiber layer by the thickness of the fiber structure.

Collection Efficiency

Filtration performance of fiber structures obtained in Examples and Comparative Examples were evaluated using a filtration evaluation apparatus ("AP-6310FP" manufactured by SIBATA SCIENTIFIC TECHNOLOGY LTD). First, a test sample (a circle having a diameter of 110 mm) was attached to a measurement cell having a filtering surface with a diameter of 85 mm. In this state, using silica dust having a maximum diameter of 2 μm or smaller and a number average diameter of 0.5 μm as test dust, dust-containing air adjusted to have a dust concentration of 30 g ± 5 mg/$m^3$ was allowed to flow into the measurement cell in which a filter had been set, for one minute at a flow rate of 30 L/min. An upstream dust concentration X1 and a downstream (post-filtration) dust concentration X2 were measured using a light-scattering mass concentration detector, and a collection efficiency was calculated by the following formula:

$$\text{Collection efficiency (\%)} = \{(X1 - X2) / X1\} \times 100$$

Collection Efficiency After Heating at 100°C

Each of the samples in a size of 15 cm × 15 cm was placed in an oven heated at 100°C for 48 hours, and then cooled to room temperature to obtain a heated sample. The collection efficiency of the obtained sample was determined in the same method as described above.

Heat resistance at 200°C

Each of the samples in a size of 15 cm × 15 cm was placed in an oven heated at 200°C for 3 hours, and then the appearance of the heated sample after 3 hours was visually evaluated as follows:

Good: The fibers in the sample were not completely molten and the sample had the same shape or almost the same shape as one before heating.
Poor: The sample was molten and deformed compared to the shape before heating.

Pressure Loss

A differential pressure (pressure loss (Pa)) was measured at a flow rate of 30 L/min using a micro-differential pressure gauge provided between an upstream side and a downstream side of the measurement cell of the filtration evaluation apparatus used for measuring collection efficiency.

Fluffing occurrence

The obtained sheet was cut into a sheet in a size of 15 cm × 15 cm, and the cut sheet was gently stroked on the side of the extra-fine fiber layer by a test performer. The fluffing occurrence after stroking was visually evaluated according to the following five criteria:

5: No fluffing occurred,
4: Almost no fluffing occurred,
3: Fluffing was slightly observed,
2: Many fluffing occurred, and
1: Extremely many fluffing occurred.

It should be noted that the number of test performer is 10.

Sensory Evaluation as Mask

As a surface sheet, a chemical bonded nonwoven fabric made of rayon was prepared and, if applicable, an extra-fine fiber layer was overlaid in contact with the nonwoven fabric so as to produce a fiber structure. Then, the fiber structure was subjected to pleat-processing using folded plates in the machine direction, subjected to ultrasonic sealing at upper and lower ends for a predetermined mask, cut into a predetermined length to have a size for width for the mask, and subjected to ultrasonic sealing at right and left ends so as to attach elastic strings to produce a mask. By means of thus-obtained mask, the sensory evaluation was made by ten subjects who actually wore it for three hours in a room at a temperature of 25°C, a humidity of 60% to determine feeling of use (ease of breathing) in accordance with the following five sensory determination criteria:

5: Very good,
4: Good,
3: Normal,
2: Bad, and
1: Very bad.

Example 1-1

(1) Preparation of Extra-Fine Fiber Layer

Using a typical meltblowing equipment, were spun by meltblowing process 100 parts by mass of polypropylene (MFR = 700 g/10 minutes) at a spinning temperature of 215°C, an air temperature of 215°C, an air volume of 0.4 MPa, a discharge rate from a single hole of 0.1 g/hole/minute, a collection distance of 30 cm from a nozzle having 400 spinning holes with a hole space of 0.6 mm (single row arrangement) so as to obtain a fiber sheet for an extra-fine fiber layer having a number average single fiber diameter of 2.5 μm, a basis weight of 10 g/$m^2$, a thickness of 0.11 mm, an apparent density of 0.10 g/$cm^3$, and a strength at 10% elongation of 0.40 N/5 cm based on the basis weight.

(2) Preparation of Substrate Layer

As a raw material, 100% by weight of PET fibers (T471, manufactured by Toray Industries, Inc.) having a number average single fiber diameter of 12.5 μm were subjected to carding to obtain a semi-random web. Next, the thus-obtained semi-random web was placed on a water-penetrable drum support having an aperture ratio of 25% and a hole diameter of 0.3 mm and continuously conveyed in a longitudinal direction at a speed of 5 m/min, while high pressure water jets were injected from above onto the semi-random web for hydroentanglement process so as to obtain an entangled fiber web (nonwoven fabric). In the entanglement process, two nozzles were used at a distance between the adjacent nozzles of 20 cm, and each of the nozzles had orifices with a hole diameter of 0.10 mm at intervals of 0.6 mm in a crosswise direction of the web. The high-pressure water jets injected from the first nozzle had a water pressure of 3.0 MPa, and the high-pressure water jets injected from the second nozzle had a water pressure of 5.0 MPa as hydroentanglement process. Further, from the opposite side, further hydro entanglement process was performed in the same way as described above so as to obtain a fiber sheet for a substrate layer having a basis weight of 35 g/$m^2$, a thickness of 0.38 mm, and an apparent density of 0.09 g/$cm^3$.

(3) Deep Integration of Extra-Fine Fiber Layer and Substrate Layer

The fiber sheet for the extra-fine fiber layer obtained in (1) and the fiber sheet for the substrate layer obtained in (2) were overlaid and placed on a porous support (aperture ratio: 25%, hole diameter: 0.3 mm), and then continuously conveyed in the longitudinal direction of the fiber sheet at a speed of 5.0 m/min. At the same time, using one nozzle having orifices with a hole diameter of 0.10 mm at intervals of 0.6 mm in the crosswise direction of the fiber sheet, the entanglement process was performed under a condition in which high pressure water jets having a water pressure of 3.0 MPa were injected from the extra-fine fiber layer side. Subsequently, with conveying the fiber sheet along a water surface of a water tank in which pure water was provided, a slit-shaped suction nozzle was brought into contact with a surface of the fiber sheet for sucking water so that the entire fiber sheet was permeated with water. After draining water, the fiber sheet was naturally dried so as to carry out the hydrocharge treatment as an electrification process. As a result, a fiber structure in which the extra-fine fiber layer spread continuously in the plane direction and the extra-fine fiber layer and the substrate layer were integrated into a deep level was obtained. Tables 5 and 6 show the results of various evaluations of the obtained fiber structure.

Example 1-2

The fiber sheet for the extra-fine fiber layer obtained in Example 1-1 (1) and the fiber sheet for the substrate layer obtained in Example 1-1 (2) were overlaid and placed on the porous support used in Example 1-1 and continuously conveyed in the longitudinal direction of the fiber sheet at a speed of 5.0 m/min. At the same time, using one nozzle having orifices with a hole diameter of 0.10 mm at intervals of 0.6 mm in the crosswise direction of the fiber sheet, the entanglement process was performed under a condition in which high-pressure water jets having a water pressure of 6.0 MPa were injected from the extra-fine fiber layer side. Subsequently, with conveying the fiber sheet along a water surface of a water tank in which pure water was provided, a slit-shaped suction nozzle was brought into contact with a surface of the fiber sheet for sucking water so that the entire fiber sheet was permeated with water. After draining water, the fiber sheet was naturally dried so as to carry out the hydrocharge treatment as an electrification process. As a result, a fiber structure in which the extra-fine fiber layer spread continuously in the plane direction and the extra-fine fiber layer and the substrate layer were integrated into a deep level was obtained. Tables 5 and 6 show the results of various evaluations of the obtained fiber structure.

Example 1-3

The fiber sheet for the extra-fine fiber layer obtained in Example 1-1 (1) and the fiber sheet for the substrate layer obtained in Example 1-1 (2) were overlaid and placed on the porous support used in Example 1-1 and continuously conveyed in the longitudinal direction of the fiber sheet at a speed of 5.0 m/min. At the same time, using one nozzle having orifices with a hole diameter of 0.10 mm at intervals of 0.6 mm in the crosswise direction of the fiber sheet, the entanglement process was performed under a condition in which high-pressure water jets having a water pressure of 9.0 MPa were injected from the extra-fine fiber layer side. Subsequently, with conveying the fiber sheet along a water surface of a water tank in which pure water was provided, a slit-shaped suction nozzle was brought into contact with a surface of the fiber sheet for sucking water so that the entire fiber sheet was permeated with water. After draining water, the fiber sheet was naturally dried so as to carry out the hydrocharge treatment as an electrification process. As a result, a fiber structure in which the extra-fine fiber layer spread continuously in the plane direction and the extra-fine fiber layer and the substrate layer were integrated into a deep level was obtained. Tables 5 and 6 show the results of various

evaluations of the obtained fiber structure.

Example 1-4

(1) Preparation of Substrate Layer

As a raw material used for the fiber sheet for the substrate layer, 100% by weight of polypropylene fibers (NF, manufactured by UBE EXSYMO CO., LTD.) having a number average single fiber diameter of 17.5 μm were subjected to carding to obtain a semi-random web. Next, the thus-obtained semi-random web was placed on a water-penetrable drum support having an aperture ratio of 25% and a hole diameter of 0.3 mm and continuously conveyed in a longitudinal direction at a speed of 5.0 m/min, while high pressure water jets were injected from above onto the semi-random web for hydroentanglement process so as to obtain an entangled fiber web (nonwoven fabric). In the entanglement process, two nozzles were used at a distance between the adjacent nozzles of 20 cm, and each of the nozzles had orifices with a hole diameter of 0.10 mm at intervals of 0.6 mm in a crosswise direction of the web. The high-pressure water jets injected from the first nozzle had a water pressure of 3.0 MPa, and the high-pressure water jets injected from the second nozzle had a water pressure of 5.0 MPa as hydro entanglement process. As such, a fiber sheet for a substrate layer having a basis weight of 35 $g/m^2$, a thickness of 0.42 mm, and an apparent density of 0.08 $g/cm^3$ was obtained.

(2) Deep Integration of Extra-Fine Fiber Layer and Substrate Layer

The fiber sheet for the extra-fine fiber layer obtained in Example 1-1 (1) and the fiber sheet for the substrate layer obtained in Example 1-4 (1) were overlaid and placed on a porous support used in Example 1-1, and then continuously conveyed in the longitudinal direction of the fiber sheet at a speed of 5.0 m/min. At the same time, using one nozzle having orifices with a hole diameter of 0.10 mm at intervals of 0.6 mm in the crosswise direction of the fiber sheet, the entanglement process was performed under a condition in which high-pressure water jets having a water pressure of 6.0 MPa were injected from the extra-fine fiber layer side. Subsequently, with conveying the fiber sheet along a water surface of a water tank in which pure water was provided, a slit-shaped suction nozzle was brought into contact with a surface of the fiber sheet for sucking water so that the entire fiber sheet was permeated with water. After draining water, the fiber sheet was naturally dried so as to carry out the hydrocharge treatment as an electrification process. As a result, a fiber structure in which the extra-fine fiber layer spread continuously in the plane direction and the extra-fine fiber layer and the substrate layer were integrated into a deep level was obtained. Tables 5 and 6 show the results of various evaluations of the obtained fiber structure.

Example 1-5

(1) Preparation of Substrate Layer

As a raw material used for the fiber sheet for the substrate layer, 70% by weight of polypropylene fibers (NF, manufactured by UBE EXSYMO CO., LTD.) having a number average single fiber diameter of 17.5 μm and 30% by weight of PET fibers (T201, manufactured by Toray Industries, Inc.) having a number average single fiber diameter of 24.6 μm were subjected to carding to obtain uniformly-mixed semi-random web. Except for using this semi-random web, a fiber sheet for the substrate layer having a number average single fiber diameter of 19.1 μm, a basis weight of 35 $g/m^2$, a thickness of 0.45 mm, and an apparent density of 0.08 $g/cm^3$ was obtained in the same manner as in Example 1-1.

(2) Deep Integration of Extra-Fine Fiber Layer and Substrate Layer

The fiber sheet for the extra-fine fiber layer obtained in Example 1-1 (1) and the fiber sheet for the substrate layer obtained in Example 1-5 (1) were overlaid and placed on a porous support used in Example 1-1, and then continuously conveyed in the longitudinal direction of the fiber sheet at a speed of 5.0 m/min. At the same time, using one nozzle having orifices with a hole diameter of 0.10 mm at intervals of 0.6 mm in the crosswise direction of the fiber sheet, the entanglement process was performed under a condition in which high-pressure water jets having a water pressure of 6.0 MPa were injected from the extra-fine fiber layer side. Subsequently, with conveying the fiber sheet along a water surface of a water tank in which pure water was provided, a slit-shaped suction nozzle was brought into contact with a surface of the fiber sheet for sucking water so that the entire fiber sheet was permeated with water. After draining water, the fiber sheet was naturally dried so as to carry out the hydrocharge treatment as an electrification process. As a result, a fiber structure in which the extra-fine fiber layer spread continuously in the plane direction and the extra-fine fiber layer and the substrate layer were integrated into a deep level was obtained. Tables 5 and 6 show the results of various evaluations of the obtained fiber structure.

Example 1-6

Except for changing the intervals of the nozzle used for deep integration of the extra-fine fiber layer and the substrate layer from 0.6 mm to 0.75 mm, entanglement process and electrification process were performed in the same manner as in Example 1-5. As a result, a fiber structure in which the extra-fine fiber layer spread continuously in the plane direction and the extra-fine fiber layer and the substrate layer were integrated into a deep level was obtained. Tables 5 and 6 show the results of various evaluations of the obtained fiber structure.

Example 1-7

Except for changing the intervals of the nozzle used for deep integration of the extra-fine layer and the substrate layer from 0.6 mm to 1.0 mm, entanglement process and electrification process were performed in the same manner as in Example 1-5. As a result, a fiber structure in which the extra-fine fiber layer spread continuously in the plane direction and the extra-fine fiber layer and the substrate layer were integrated into a deep level was obtained. Tables 5 and 6 show the results of various evaluations of the obtained fiber structure.

Example 1-8

Except for changing the intervals of the nozzle used for deep integration of the extra-fine layer and the substrate layer from 0.6 mm to 1.5 mm, entanglement process and electrification process were performed in the same manner as in Example 1-5. As a result, a fiber structure in which the extra-fine fiber layer spread continuously in the plane direction and the extra-fine fiber layer and the substrate layer were integrated into a deep level was obtained. Tables 5 and 6 show the results of various evaluations of the obtained fiber structure.

Example 1-9

Except for changing the intervals of the nozzle used for deep integration of the extra-fine layer and the substrate layer from 0.6 mm to 3.0 mm, entanglement process and electrification process were performed in the same manner as in Example 1-5. As a result, a fiber structure in which the extra-fine fiber layer spread continuously in the plane direction and the extra-fine fiber layer and the substrate layer were integrated into a deep level was obtained. Tables 5 and 6 show the results of various evaluations of the obtained fiber structure.

Comparative Example 1-1

Electrification process was performed in the same manner as in Example 1-1 except that the fiber sheet for the extra-fine fiber layer obtained in Example 1-1 (1) was only provided so as to obtain a fiber structure. Tables 7 and 8 show the result of various evaluations of the obtained fiber structure.

Comparative Example 1-2

Electrification process was performed in the same manner as in Example 1-1 except that the fiber sheet for the substrate layer obtained in Example 1-1 (2) was only provided so as to obtain a fiber structure. Tables 7 and 8 show the result of various evaluations of the obtained fiber structure.

Comparative Example 1-3

Electrification process was performed in the same manner as in Example 1-1 except that the fiber sheet for the substrate layer obtained in Example 1-4 (1) was only provided so as to obtain a fiber structure. Tables 7 and 8 show the result of various evaluations of the obtained fiber structure.

Comparative Example 1-4

Electrification process was performed in the same manner as in Example 1-1 except that the fiber sheet for the substrate layer obtained in Example 1-5 (1) was only provided so as to obtain a fiber structure. Tables 7 and 8 show the result of various evaluations of the obtained fiber structure.

Comparative Example 1-5

The fiber sheet for the extra-fine fiber layer obtained in Example 1-1 (1) and the fiber sheet for the substrate layer obtained in Example 1-5 (1) were overlaid so as to form a fiber sheet, and subsequently, with conveying the fiber sheet along the water surface of the water tank in which pure water was provided, the slit-shaped suction nozzle was brought into contact with a surface of the fiber sheet for sucking water so that the entire fiber sheet was permeated with water. After draining water, the fiber sheet was naturally dried so as to carry out the hydrocharge treatment as an electrification process. Tables 7 and 8 show the result of various evaluations of the obtained fiber structure.

Comparative Example 1-6

The fiber sheet for the extra-fine fiber layer obtained in Example 1-1 (1) and the fiber sheet for the substrate layer obtained in Example 1-1 (2) were overlaid and placed on a porous support used in Example 1-1, and then continuously conveyed in the longitudinal direction of the fiber sheet at a speed of 5.0 m/min. At the same time, using one nozzle having orifices with a hole diameter of 0.10 mm at intervals of 0.6 mm in the crosswise direction of the fiber sheet, the entanglement process was performed under the condition in which high-pressure water jets having a water pressure of 1.5 MPa were injected from the extra-fine fiber layer side. Subsequently with conveying the fiber sheet along the water surface of the water tank in which pure water was provided, a slit-shaped suction nozzle was brought into contact with the surface of the fiber sheet for sucking water so that the entire fiber sheet was permeated with water. After draining water, the fiber sheet was naturally dried so as to carry out the hydrocharge treatment as an electrification process. As a result, a fiber structure in which the extra-fine fiber layer spreads continuously in the plane direction and the extra-fine fiber layer and the substrate layer were not integrated into a deep level was obtained. Tables 7 and 8 show the result of various evaluations of the obtained fiber structure.

Table 5

| Item | Unit | Ex. 1-1 | Ex. 1-2 | Ex. 1-3 | Ex. 1-4 | Ex. 1-5 | Ex. 1-6 | Ex. 1-7 | Ex. 1-8 | Ex. 1-9 |
|---|---|---|---|---|---|---|---|---|---|---|
| Fiber sheet for extra-fine fiber layer | | | | | | | | | | |
| Number average single fiber diameter | Mm | 2.5 | 2.5 | 2.5 | 2.5 | 2.5 | 2.5 | 2.5 | 2.5 | 2.5 |
| Basis weight | $g/m^2$ | 10 | 10 | 10 | 10 | 10 | 10 | 10 | 10 | 10 |
| Thickness | mm/ sheet | 0.11 | 0.11 | 0.11 | 0.11 | 0.11 | 0.11 | 0.11 | 0.11 | 0.11 |
| Apparent density | $g/cm^3$ | 0.10 | 0.10 | 0.10 | 0.10 | 0.10 | 0.10 | 0.10 | 0.10 | 0.10 |
| Strength at 10% elongation (per basis weight) | N/5cm | 0.40 | 0.40 | 0.40 | 0.40 | 0.40 | 0.40 | 0.40 | 0.40 | 0.40 |
| Fiber sheet for substrate layer | | | | | | | | | | |
| Number average single fiber diameter | Mm | 12.5 | 12.5 | 12.5 | 17.5 | 19.1 | 19.1 | 19.1 | 19.1 | 19.1 |
| Basis weight | $g/m^2$ | 35 | 35 | 35 | 35 | 35 | 35 | 35 | 35 | 35 |
| Thickness | mm/ sheet | 0.38 | 0.38 | 0.38 | 0.42 | 0.45 | 0.45 | 0.45 | 0.45 | 0.45 |

(continued)

| Fiber sheet for substrate layer | | | | | | | | | | |
|---|---|---|---|---|---|---|---|---|---|---|
| Apparent density | $g/cm^3$ | 0.09 | 0.09 | 0.09 | 0.08 | 0.08 | 0.08 | 0.08 | 0.08 | 0.08 |
| Condition for entanglement of fiber sheet for extra-fine fiber layer and fiber sheet for substrate layer | | | | | | | | | | |
| Water pressure | MPa | 3.0 | 6.0 | 9.0 | 6.0 | 6.0 | 6.0 | 6.0 | 6.0 | 6.0 |
| Intervals between orifices | Mm | 0.6 | 0.6 | 0.6 | 0.6 | 0.6 | 0.75 | 1.0 | 1.5 | 3.0 |

Table 6

| Fiber structure | | Unit | Ex. 1-1 | Ex. 1-2 | Ex. 1-3 | Ex. 1-4 | Ex. 1-5 | Ex. 1-6 | Ex. 1-7 | Ex. 1-8 | Ex. 1-9 |
|---|---|---|---|---|---|---|---|---|---|---|---|
| Thickness of substrate layer | | mm/sheet | 0.39 | 0.39 | 0.39 | 0.39 | 0.40 | 0.41 | 0.42 | 0.43 | 0.43 |
| Basis weight | | $g/m^2$ | 45 | 45 | 45 | 45 | 45 | 45 | 45 | 45 | 45 |
| Apparent density | | $g/cm^3$ | 0.12 | 0.12 | 0.12 | 0.12 | 0.11 | 0.11 | 0.11 | 0.10 | 0.10 |
| Density of extra-fine fibers only | | $g/cm^3$ | 0.03 | 0.03 | 0.03 | 0.03 | 0.03 | 0.02 | 0.02 | 0.02 | 0.02 |
| Existence proportion | Proximal region | % | 75.3 | 70.1 | 65.5 | 67.6 | 65.0 | 72.0 | 79.0 | 86.0 | 93.0 |
| | Central region | % | 17.0 | 18.3 | 24.4 | 18.4 | 18.5 | 14.8 | 11.1 | 7.4 | 3.7 |
| | Distal region | % | 7.7 | 11.6 | 10.1 | 17.0 | 16.5 | 13.2 | 9.9 | 6.6 | 3.3 |
| Width (W) | | Mm | 153 | 180 | 245 | 230 | 221 | 193 | 210 | 203 | 198 |
| Collection efficiency | | % | 82.11 | 80.40 | 79.02 | 79.00 | 79.11 | 83.40 | 85.28 | 89.23 | 90.05 |
| Pressure loss | | Pa | 8 | 7 | 6 | 7 | 5 | 5.5 | 6 | 6.5 | 7 |
| QF | | | 0.22 | 0.23 | 0.26 | 0.22 | 0.31 | 0.33 | 0.32 | 0.34 | 0.33 |
| Fluffing occurrence | | 1-5 | 2 | 5 | 5 | 5 | 5 | 5 | 5 | 5 | 3 |
| Sensory evaluation as mask | | 1-5 | 3 | 3 | 4 | 4 | 4 | 4 | 4 | 4 | 3 |

Table 7

| Item | Unit | Com. Ex. 1-1 | Com. Ex. 1-2 | Com. Ex. 1-3 | Com. Ex. 1-4 | Com. Ex. 1-5 | Com. Ex. 1-6 |
|---|---|---|---|---|---|---|---|
| Fiber sheet for extra-fine fiber layer | | | | | | | |
| Number average single fiber diameter | Mm | 2.5 | - | - | - | 2.5 | 2.5 |
| Basis weight | $g/m^2$ | 10 | - | - | - | 10 | 10 |
| Thickness | mm/sheet | 0.11 | - | - | - | 0.11 | 0.11 |
| Apparent density | $g/cm^3$ | 0.10 | - | - | - | 0.10 | 0.10 |
| Strength at 10% elongation (per basis weight) | N/5cm | 0.40 | - | - | - | 0.40 | 0.40 |
| Fiber sheet for substrate layer | | | | | | | |
| Number average single fiber diameter | Mm | - | 12.5 | 17.5 | 19.1 | 19.1 | 12.5 |
| Basis weight | $g/m^2$ | - | 35 | 35 | 35 | 35 | 35 |
| Thickness | mm/sheet | - | 0.38 | 0.42 | 0.45 | 0.45 | 0.38 |
| Apparent density | $g/cm^3$ | - | 0.09 | 0.08 | 0.08 | 0.08 | 0.09 |
| Condition for entanglement of fiber sheet for extra-fine fiber layer and fiber sheet for substrate layer | | | | | | | |
| Water pressure | MPa | - | - | - | - | - | 1.5 |
| Intervals between orifices | Mm | - | - | - | - | - | 0.6 |

Table 8

| Fiber structure | | Unit | Com. Ex. 1-1 | Com. Ex. 1-2 | Com. Ex. 1-3 | Com. Ex. 1-4 | Com. Ex. 1-5 | Com. Ex. 1-6 |
|---|---|---|---|---|---|---|---|---|
| Thickness of substrate layer | | mm/she et | - | 0.38 | 0.42 | 0.45 | 0.58 | 0.41 |
| Basis weight | | $g/m^2$ | 10 | 35 | 35 | 35 | 45 | 45 |
| Apparent density | | $g/cm^3$ | 0.09 | 0.09 | 0.09 | 0.08 | 0.08 | 0.11 |
| Density of extra-fine fibers only | | $g/cm^3$ | 0.11 | - | - | - | 0.02 | 0.02 |
| Existence proportion | Proximal region | % | - | - | - | - | - | 89.7 |
| | Central region | % | - | - | - | - | - | 10.3 |
| | Distal region | % | - | - | - | - | - | 0 |
| Width (W) | | Mm | - | - | - | - | - | - |
| Collection efficiency | | % | 88.87 | 3.15 | 23.40 | 18.89 | 89.11 | 84.32 |
| Pressure loss | | Pa | 10 | 0 | 0 | 0 | 11 | 11 |
| QF | | | 0.21 | - | - | - | 0.20 | 0.17 |
| Fluffing occurrence | | 1-5 | 1 | 3 | 3 | 3 | 1 | 1 |
| Sensory evaluation as mask | | 1-5 | 1 | 5 | 5 | 5 | 1 | 1 |

As can be seen from Tables 7 and 8, in the Comparative Example 1-1 consisting only of the fiber sheet for the extra-fine fiber layer, and in the Comparative Example 1-5 comprising the fiber sheet for the extra-fine fiber layer simply overlaid on the fiber sheet for the substrate layer without entanglement process of the fiber sheet for the extra-fine fiber layer, high collection efficiency can be achieved. However, since these Comparative Examples are high in pressure loss of 10 Pa or more, the sensory evaluations as mask are evaluated as very bad. Furthermore, since there can be seen a lot of fluffing in Comparative Examples 1-1 and 1-5, the fluffing occurrence is also evaluated as very bad in these

Comparative Examples.

In Comparative Examples 1-2 to 1-4 each consisting only of the fiber sheet for the substrate layer, although these Comparative Examples are extremely low in pressure loss, these are too low in collection efficiency to be utilized as a filter.

In Comparative Example 1-6, failure of the extra-fine fibers to reach the distal region prevents the extra-fine fiber layer from deep integration into the substrate layer. As a result, the pressure loss is as high as 11 Pa, thus the sensory evaluation as mask is also evaluated as very bad. Furthermore, the fluffing occurrence is also evaluated as very bad because of a lot of fluffing.

On the other hand, in each of Examples 1-1 to 1-9, as shown in Table 5, use of a specific sheet for the extra-fine fiber layer enables to facilitate deep integration on specific condition. As a result, as shown in Table 6, these Examples can achieve not only high collection efficiency, but also low pressure loss, and further the sensory evaluation as mask is also good compared with Comparative Example 1-1 or 1-5. Furthermore, the fluffing occurrence is also evaluated as good because of less fluffing compared with Comparative Example 1-1 or 1-5.

In the following Examples 2-1 to 2-4 and Comparative Examples 2-1 to 2-7, were evaluated not only collection efficiency for the heat-resistant fiber structures at room temperature but also the collection efficiency thereof after heating at 100°C. Furthermore, heat resistance at 200°C was also investigated.

Example 2-1

(1) Preparation of extra-fine fiber layer

Using a typical meltblowing equipment, were spun by meltblowing process 100 parts by mass of amorphous polyetherimide having a melt viscosity of 900 Pa·s at 330°C at spinning temperature of 420°C, an air temperature of 420°C, an air volume of 0.4 MPa, a discharge rate from a single hole of 0.1 g/hole/minute, a collection distance of 30 cm from a nozzle having 400 spinning holes with a hole space of 0.6 mm (single row arrangement) so as to obtain a fiber sheet for an extra-fine fiber layer having a number average single fiber diameter of 2.2 μm, a basis weight of 10 g/m$^2$, a thickness of 0.12 mm, an apparent density of 0.08 g/cm$^3$, and a strength at 10% elongation of 0.07 N/5 cm based on the basis weight.

(2) Preparation of Substrate Layer

As a raw material, 100% by weight of PEI (polyetherimide) fibers ("KURAKISSS" (registered trade mark), manufactured by KURARAY CO., LTD) having a number average single fiber diameter of 14.9 μm were subjected to carding to obtain a semi-random web. Next, the thus-obtained semi-random web was placed on a water-penetrable drum support having an aperture ratio of 25% and a hole diameter of 0.3 mm and continuously conveyed in a longitudinal direction at a speed of 5 m/min, while high pressure water jets were injected from above onto the semi-random web for hydro entanglement process so as to obtain an entangled fiber web (nonwoven fabric). In the entanglement process, two nozzles were used at a distance between the adjacent nozzles of 20 cm, and each of the nozzles had orifices with a hole diameter of 0.10 mm at intervals of 0.6 mm in a crosswise direction of the web. The high-pressure water jets injected from the first nozzle had a water pressure of 3.0 MPa, and the high-pressure water jets injected from the second nozzle had a water pressure of 5.0 MPa as hydro entanglement process. Further, from the opposite side, further hydroentanglement process was performed in the same way as described above so as to obtain a fiber sheet for a substrate layer having a basis weight of 35 g/m$^2$, a thickness of 0.43 mm, and an apparent density of 0.08 g/cm$^3$.

(3) Deep Integration of Extra-Fine Fiber Layer and Substrate Layer

The fiber sheet for the extra-fine fiber layer obtained in (1) and the fiber sheet for the substrate layer obtained in (2) were overlaid and placed on a porous support (aperture ratio: 25%, hole diameter: 0.3 mm), and then continuously conveyed in the longitudinal direction of the fiber sheet at a speed of 5.0 m/min. At the same time, using one nozzle having orifices with a hole diameter of 0.10 mm at intervals of 0.6 mm in the crosswise direction of the fiber sheet, the entanglement process was performed under a condition in which high-pressure water jets having a water pressure of 6.0 Mpa were injected from the extra-fine fiber layer side. Subsequently, with conveying the fiber sheet along a water surface of a water tank in which pure water was provided, a slit-shaped suction nozzle was brought into contact with a surface of the fiber sheet for sucking water so that the entire fiber sheet was permeated with water. After draining water, the fiber sheet was naturally dried so as to carry out the hydrocharge treatment as an electrification process. As a result, a fiber structure in which the extra-fine fiber layer spread continuously in the plane direction and the extra-fine fiber layer and the substrate layer were integrated into a deep level was obtained. Tables 9 and 10 show the results of various evaluations of the obtained fiber structure.

Example 2-2

The fiber sheet for the extra-fine fiber layer obtained in Example 2-1 (1) and the fiber sheet for the substrate layer obtained in Example 2-1 (2) were overlaid and placed on the porous support used in Example 2-1 and continuously conveyed in the longitudinal direction of the fiber sheet at a speed of 5.0 m/min. At the same time, using one nozzle having orifices with a hole diameter of 0.10 mm at intervals of 1.0 mm in the crosswise direction of the fiber sheet, the entanglement process was performed under a condition in which high-pressure water jets having a water pressure of 6.0 MPa were injected from the extra-fine fiber layer side. Subsequently, with conveying the fiber sheet along a water surface of a water tank in which pure water was provided, a slit-shaped suction nozzle was brought into contact with a surface of the fiber sheet for sucking water so that the entire fiber sheet was permeated with water. After draining water, the fiber sheet was naturally dried so as to carry out the hydrocharge treatment as an electrification process. As a result, a fiber structure in which the extra-fine fiber layer spread continuously in the plane direction and the extra-fine fiber layer and the substrate layer were integrated into a deep level was obtained. Tables 9 and 10 show the results of various evaluations of the obtained fiber structure.

Example 2-3

(1) Preparation of Extra-Fine Fiber Layer

Using a typical meltblowing equipment, were spun by meltblowing process 100 parts by mass of thermotropic liquid crystal wholly aromatic polyester (LCP, Vectra-L type, manufactured by POLYPLASTICS CO., LTD.), comprising of copolymer of p-hydroxybenzoic acid and 6-hydroxy-2-naphthoic acid having a glass transition temperature of 193°C, a melting point of 300°C, and a melt viscosity of 15 Pa·s at 310 °C, at a spinning temperature of 310 °C, an air temperature of 310 °C, an air volume of 0.4 MPa, a discharge rate from a single hole of 0.1 g/hole/minute, a collection distance of 30 cm from a nozzle having 400 spinning holes with a hole space of 0.6 mm (single row arrangement) so as to obtain a fiber sheet for an extra-fine fiber layer having a number average single fiber diameter of 2.4 $\mu$m, a basis weight of 10 g/m$^2$, a thickness of 0.10 mm, an apparent density of 0.10 g/cm$^3$, and a strength at 10% elongation of 0.95 N/5 cm based on the basis weight.

(2) Preparation of Substrate Layer

As a raw material, were subjected 100% by weight of thermotropic liquid crystal wholly aromatic polyester fibers having a number average single fiber diameter of 15.9 $\mu$m to carding to obtain a semi-random web. Next, the thus-obtained semi-random web was placed on a water-penetrable drum support having an aperture ratio of 25% and a hole diameter of 0.3 mm and continuously conveyed in a longitudinal direction at a speed of 5 m/min, while high pressure water jets were injected from above onto the semi-random web for hydro entanglement process so as to obtain an entangled fiber web (nonwoven fabric). In the entanglement process, two nozzles were used at a distance between the adjacent nozzles of 20 cm, and each of the nozzles had orifices with a hole diameter of 0.10 mm at intervals of 0.6 mm in a crosswise direction of the web. The high-pressure water jets injected from the first nozzle had a water pressure of 3.0 MPa, and the high-pressure water jets injected from the second nozzle had a water pressure of 5.0 MPa as hydroentanglement process. Further, from the opposite side, further hydroentanglement process was performed in the same way as described above so as to obtain a fiber sheet for a substrate layer having a basis weight of 35 g/m$^2$, a thickness of 0.35 mm, and an apparent density of 0.10 g/cm$^3$.

(3) Deep Integration of Extra-Fine Fiber Layer and Substrate Layer

The fiber sheet for the extra-fine fiber layer obtained in (1) and the fiber sheet for the substrate layer obtained in (2) were overlaid and placed on a porous support (aperture ratio: 25%, hole diameter: 0.3 mm), and then continuously conveyed in the longitudinal direction of the fiber sheet at a speed of 5.0 m/min. At the same time, using one nozzle having orifices with a hole diameter of 0.10 mm at intervals of 0.6 mm in the crosswise direction of the fiber sheet, the entanglement process was performed under a condition in which high-pressure water jets having a water pressure of 6.0 MPa were injected from the extra-fine fiber layer side. Subsequently, with conveying the fiber sheet along a water surface of a water tank in which pure water was provided, a slit-shaped suction nozzle was brought into contact with a surface of the fiber sheet for sucking water so that the entire fiber sheet was permeated with water. After draining water, the fiber sheet was naturally dried so as to carry out the hydrocharge treatment as an electrification process. As a result, a fiber structure in which the extra-fine fiber layer spread continuously in the plane direction and the extra-fine fiber layer and the substrate layer were integrated into a deep level was obtained. Tables 9 and 10 show the results of various evaluations of the obtained fiber structure.

Example 2-4

The fiber sheet for the extra-fine fiber layer obtained in Example 2-3 (1) and the fiber sheet for the substrate layer obtained in Example 2-3 (2) were overlaid and placed on a porous support used in Example 2-1, and then continuously conveyed in the longitudinal direction of the fiber sheet at a speed of 5.0 m/min. At the same time, using one nozzle having orifices with a hole diameter of 0.10 mm at intervals of 1.0 mm in the crosswise direction of the fiber sheet, the entanglement process was performed under a condition in which high-pressure water jets having a water pressure of 6.0 MPa were injected from the extra-fine fiber layer side. Subsequently, with conveying the fiber sheet along a water surface of a water tank in which pure water was provided, a slit-shaped suction nozzle was brought into contact with a surface of the fiber sheet for sucking water so that the entire fiber sheet was permeated with water. After draining water, the fiber sheet was naturally dried so as to carry out the hydrocharge treatment as an electrification process. As a result, a fiber structure in which the extra-fine fiber layer spread continuously in the plane direction and the extra-fine fiber layer and the substrate layer were integrated into a deep level was obtained. Tables 9 and 10 show the results of various evaluations of the obtained fiber structure.

Comparative Example 2-1

Electrification process was performed in the same manner as in Example 2-1 except that the fiber sheet for the extra-fine fiber layer obtained in Example 2-1 (1) was only provided so as to obtain a fiber structure. Tables 9 and 10 show the result of various evaluations of the obtained fiber structure.

Comparative Example 2-2

Electrification process was performed in the same manner as in Example 2-3 except that the fiber sheet for the extra-fine fiber layer obtained in Example 2-3 (1) was only provided so as to obtain a fiber structure. Tables 9 and 10 show the result of various evaluations of the obtained fiber structure.

Comparative Example 2-3

Electrification process was performed in the same manner as in Example 2-1 except that the fiber sheet for the substrate layer obtained in Example 2-1 (2) was only provided so as to obtain a fiber structure. Tables 9 and 10 show the result of various evaluations of the obtained fiber structure.

Comparative Example 2-4

Electrification process was performed in the same manner as in Example 2-3 except that the fiber sheet for the substrate layer obtained in Example 2-3 (2) was only provided so as to obtain a fiber structure. Tables 9 and 10 show the result of various evaluations of the obtained fiber structure.

Comparative Example 2-5

(1) Preparation of extra-fine fiber layer

Using a typical meltblowing equipment, were spun by meltblowing process 100 parts by mass of polypropylene (MFR=700 g/10 min) at spinning temperature of 215 °C, an air temperature of 215 °C, an air volume of 0.4 MPa, a discharge rate from a single hole of 0.1 g/hole/minute, a collection distance of 30 cm from a nozzle having 400 spinning holes with a hole space of 0.6 mm (single row arrangement) so as to obtain a fiber sheet for an extra-fine fiber layer having a number average single fiber diameter of 2.5 μm, a basis weight of 10 g/m$^2$, a thickness of 0.11 mm, an apparent density of 0.10 g/cm$^3$, and a strength at 10% elongation of 0.40 N/5 cm based on the basis weight.

Except that the obtained fiber sheet for the extra-fine fiber layer was only provided, electrification process was performed in the same manner as in Example 2-1 so as to obtain a fiber structure. Tables 9 and 10 show the result of various evaluations of the obtained fiber structure.

Comparative Example 2-6

(1) Preparation of substrate layer

As a raw material, 100% by weight of polypropylene (PP) fibers (NF, manufactured by UBE EXSYMO CO.,

LTD.) having a number average single fiber diameter of 17.5 μm were subjected to carding to obtain a semi-random web. Next, the thus-obtained semi-random web was placed on a water-penetrable drum support having an aperture ratio of 25% and a hole diameter of 0.3 mm and continuously conveyed in a longitudinal direction at a speed of 5.0 m/min, while high pressure water jets were injected from above onto the semi-random web for hydro entanglement process so as to obtain an entangled fiber web (nonwoven fabric). In the entanglement process, two nozzles were used at a distance between the adjacent nozzles of 20 cm, and each of the nozzles had orifices with a hole diameter of 0.10 mm at intervals of 0.6 mm in a crosswise direction of the web. The high-pressure water jets injected from the first nozzle had a water pressure of 3.0 MPa, and the high-pressure water jets injected from the second nozzle had a water pressure of 5.0 MPa as hydroentanglement process. As a result, a fiber sheet for a substrate layer having a basis weight of 35 $g/m^2$, a thickness of 0.42 mm, and an apparent density of 0.08 $g/cm^3$ was obtained.

Except that the obtained fiber sheet for the substrate layer was only provided, electrification process was performed in the same manner as in Example 2-1 so as to obtain a fiber structure. Tables 9 and 10 show the result of various evaluations of the obtained fiber structure.

Comparative Example 2-7

The fiber sheet for the extra-fine fiber layer obtained in Example 2-1 (1) and the fiber sheet for the substrate layer obtained in Example 2-1 (2) were overlaid and placed on a porous support used in Example 2-1, and then continuously conveyed in the longitudinal direction of the fiber sheet at a speed of 5.0 m/min. At the same time, using one nozzle having orifices with a hole diameter of 0.10 mm at intervals of 0.6 mm in the crosswise direction of the fiber sheet, the entanglement process was performed under a condition in which high-pressure water jets having a water pressure of 1.5 Mpa were injected from the extra-fine fiber layer side. Subsequently, with conveying the fiber sheet along a water surface of a water tank in which pure water was provided, a slit-shaped suction nozzle was brought into contact with a surface of the fiber sheet for sucking water so that the entire fiber sheet was permeated with water. After draining water, the fiber sheet was naturally dried so as to carry out the hydrocharge treatment as an electrification process. As a result, a fiber structure was obtained in which the extra-fine fiber layer spread continuously in the plane direction whereas the extra-fine fiber layer and the substrate layer were not integrated into a deep level. Tables 9 and 10 show the results of various evaluations of the obtained fiber structure.

Table 9

| Item | Unit | Ex. 2-1 | Ex. 2-2 | Ex. 2-3 | Ex. 2-4 | Com. Ex. 2-1 | Com. Ex. 2-2 | Com. Ex. 2-3 | Com. Ex. 2-4 | Com. Ex. 2-5 | Com. Ex. 2-6 | Com. Ex. 2-7 |
|---|---|---|---|---|---|---|---|---|---|---|---|---|
| Fiber sheet for extra-fine fiber layer | | | | | | | | | | | | |
| Polymer | | PEI | PEI | LCP | LCP | PEI | LCP | - | - | PP | - | PEI |
| Number average single fiber diameter | μm | 2.2 | 2.2 | 2.4 | 2.4 | 2.2 | 2.4 | - | - | 2.5 | - | 2.2 |
| Basis weight | $g/m^2$ | 10 | 10 | 10 | 10 | 10 | 10 | - | - | 10 | - | 10 |
| Thickness | mm/sheet | 0.12 | 0.12 | 0.10 | 0.10 | 0.12 | 0.10 | - | - | 0.11 | - | 0.12 |
| Apparent density | $g/cm^3$ | 0.08 | 0.08 | 0.10 | 0.10 | 0.08 | 0.10 | - | - | 0.10 | - | 0.08 |
| Strength at 10% elongation (per basis weight) | N/5cm | 0.07 | 0.07 | 0.95 | 0.95 | 0.07 | 0.95 | - | - | 0.40 | - | 0.07 |
| Fiber sheet for substrate layer | | | | | | | | | | | | |
| Polymer | | PEI | PEI | LCP | LCP | - | - | PEI | LCP | - | PP | PEI |
| Number average single fiber diameter | μm | 14.9 | 14.9 | 15.9 | 15.9 | - | - | 14.9 | 15.9 | - | 17.5 | 14.9 |
| Basis weight | $g/m^2$ | 35 | 35 | 35 | 35 | - | - | 35 | 35 | - | 35 | 35 |
| Thickness | mm/sheet | 0.43 | 0.43 | 0.35 | 0.35 | - | - | 0.43 | 0.35 | - | 0.42 | 0.43 |
| Apparent density | $g/cm^3$ | 0.08 | 0.08 | 0.10 | 0.10 | - | - | 0.08 | 0.10 | - | 0.08 | 0.08 |
| Condition for entanglement of fiber sheet for extra-fine fiber layer and fiber sheet for substrate layer | | | | | | | | | | | | |
| Water pressure | MPa | 6.0 | 6.0 | 6.0 | 6.0 | - | - | - | - | - | - | 1.5 |
| Intervals between orifices | mm | 0.6 | 1.0 | 0.6 | 1.0 | - | - | - | - | - | - | 0.6 |

Table 10

| Fiber structure | | Unit | Ex. 2-1 | Ex. 2-2 | Ex. 2-3 | Ex. 2-4 | Com. Ex. 2-1 | Com. Ex. 2-2 | Com. Ex. 2-3 | Com. Ex. 2-4 | Com. Ex. 2-5 | Com. Ex. 2-6 | Com. Ex. 2-7 |
|---|---|---|---|---|---|---|---|---|---|---|---|---|---|
| Thickness of substrate layer | | mm/ sheet | 0.43 | 0.41 | 0.35 | 0.34 | - | - | 0.43 | 0.35 | - | 0.42 | 0.44 |
| Basis weight | | $g/m^2$ | 45 | 45 | 45 | 45 | 10 | 10 | 35 | 35 | 10 | 35 | 45 |
| Apparent density | | $g/cm^3$ | 0.10 | 0.11 | 0.13 | 0.13 | 0.08 | 0.10 | 0.08 | 0.10 | 0.09 | 0.09 | 0.10 |
| Density of extra-fine fibers only | | $g/cm^3$ | 0.02 | 0.02 | 0.03 | 0.03 | - | - | - | - | - | - | 0.02 |
| Existence proportion | Proximal region | % | 64.0 | 81.1 | 62.2 | 78.2 | - | - | - | - | - | - | 91.1 |
| | Central region | % | 19.3 | 10.3 | 21.5 | 12.1 | - | - | - | - | - | - | 8.9 |
| | Distal region | % | 16.7 | 8.6 | 16.3 | 9.7 | - | - | - | - | - | - | 0 |
| Width (W) | | Mm | 210 | 215 | 195 | 192 | - | - | - | - | - | - | - |
| Collection efficiency | | % | 78.33 | 86.20 | 80.01 | 88.30 | 89.12 | 90.10 | 24.13 | 25.33 | 88.87 | 23.40 | 90.01 |
| Pressure loss | | Pa | 5 | 6 | 6 | 7 | 10 | 12 | 0 | 0 | 10 | 0 | 10 |
| 200°C heat resistance (3h) | | | Good | Good | Good | Good | Good | Good | Good | Good | Poor | Poor | Good |
| Collection efficiency after heating under 100°C (%) | | | 73.09 | 80.24 | 74.22 | 82.30 | 83.10 | 84.06 | 22.54 | 23.66 | 62.92 | 16.50 | 83.98 |
| Retention rate of collection efficiency before and after heating (%) | | | 93.3 | 93.1 | 92.8 | 93.2 | 93.2 | 93.3 | 93.4 | 93.4 | 70.8 | 70.5 | 93.3 |
| QF 1) | | - | 0.31 | 0.33 | 0.27 | 0.31 | 0.22 | 0.19 | - | - | 0.22 | - | 0.23 |
| QF after leaving under high temperature 2) | | | 0.26 | 0.27 | 0.23 | 0.25 | 0.18 | 0.15 | - | - | 0.10 | - | 0.18 |
| Fluffing occurrence | | 1-5 | 5 | 5 | 5 | 5 | 1 | 1 | 3 | 3 | 1 | 3 | 3 |

(continued)

| Fiber structure | Unit | Ex. 2-1 | Ex. 2-2 | Ex. 2-3 | Ex. 2-4 | Com. Ex. 2-1 | Com. Ex. 2-2 | Com. Ex. 2-3 | Com. Ex. 2-4 | Com. Ex. 2-5 | Com. Ex. 2-6 | Com. Ex. 2-7 |
|---|---|---|---|---|---|---|---|---|---|---|---|---|
| Sensory evaluation as mask | 1-5 | 3 | 4 | 3 | 4 | 1 | 1 | 5 | 5 | 1 | 5 | 2 |

1) QF was calculated based on the collection efficiency and the pressure loss in the table.
2) "QF after leaving under high temperature" was calculated based on "collection efficiency after heating under 100°C" and the pressure loss in the table.

As can be seen in Tables 9 and 10, in Comparative Examples 2-1 and 2-2 each consisting only of the fiber sheet for the extra-fine fiber layer, high collection efficiency can be achieved. However, Comparative Examples 2-1 and 2-2 are high in pressure loss of 10 Pa or more, the sensory evaluations as mask are evaluated as very bad. Furthermore, the fluffing occurrence is also evaluated as very bad in these Comparative Examples.

Further, in Comparative Examples 2-3 and 2-4 each consisting only of the fiber sheet for the substrate layer, although Comparative Examples 2-3 and 2-4 are extremely low in pressure loss, these are too low in collection efficiency to be utilized as a filter.

Moreover, where the resin comprising the fiber structure is not a heat-resistant, as in Comparative Examples 2-5 and 2-6, these Comparative Examples 2-5 and 2-6 are unable to withstand the environment of 200°C for 3 hours to cause fiber melt.

Further, in Comparative Example 2-7, the water pressure for entanglement is so low that the extra-fine fibers do not reach the distal region. Accordingly, the extra-fine fiber layer cannot be deeply integrated into the substrate layer. Thus-obtained fiber structure is high in pressure loss of 10 Pa, so that the sensory evaluation as mask is evaluated as very bad. Furthermore, since there can be seen a lot of fluffing, the fluffing occurrence is also evaluated as bad.

On the other hand, as shown in Fig. 9, in each of the fiber structures of Example 2-1 to 2-4, use of a specific fiber sheet for extra-fine fiber layer contributes to deep integration into the fiber sheet for the substrate layer. Accordingly, Example 2-1 to 2-4 can achieve not merely excellent heat resistance and high collection efficiency, but also low pressure loss. Furthermore, the fluffing occurrence is also evaluated as good because of less fluffing compared with Comparative Example 2-5.

## INDUSTRIAL APPLICABILITY

The fiber structure according to the present invention has an improved collection efficiency as well as reduced pressure loss at a low level. Accordingly, such a fiber structure can be suitably used as various filters (in particular, air filters, bag filters, liquid filters), for example, masks (including heat-resistant masks), filters for various transportation means required to have heat resistance, filters for various air-conditioning elements, filters for air purifiers, cabin filters, and filters used in various devices.

Although the present invention has been fully described in connection with the preferred embodiments thereof, those skilled in the art will readily conceive numerous changes and modifications within the framework of obviousness of the present invention. Accordingly, such changes and modifications are, unless they depart from the scope of the present invention as delivered from the claims annexed hereto, to be construed as included therein.

## REFERENCE NUMERALS

| | |
|---|---|
| 10 | extra-fine fiber layer |
| 20 | substrate layer |
| 12 | mixture portion |
| P | proximal region |
| C | Central region |
| D | Distal region |
| W | width of the mixture portion |
| Y | thickness direction |
| X | width direction |
| L | boundary line between central region and distal region |

## Claims

**1.** A fiber structure comprising an extra-fine fiber layer spreading in a plane direction, and a substrate layer adjoining the extra-fine fiber layer, wherein

the extra-fine fiber layer comprises extra-fine fibers having a number average single fiber diameter as measured as set out in the specification of 5 μm or less;

the substrate layer comprises non-extra-fine fibers having a number average single fiber diameter as measured as set out in the specification of 7 μm or more;

in a cross section along a thickness direction of the fiber structure, the substrate layer contains mixture portions

in each of which some of the extra-fine fibers pushed between the non-extra-fine fibers are widened in a crosswise direction; and where the substrate layer is equally divided into three segments and each of the segments is denoted sequentially from the extra-fine fiber layer side as a proximal region, a central region, and a distal region, at least a part of the pushed extra-fine fibers from the extra-fine fiber layer reach the distal region,
wherein the fiber structure is an entangled product of one or more extra-fine fiber layers formed of the extra-fine fibers with one or more non-extra-fine fiber layers formed of the non-extra-fine fibers,
the extra-fine fiber layer is a nonwoven fabric,
the non-extra-fine fiber layer is a nonwoven fabric,
the fibers constituting the substrate layer contain at least one species selected from the group consisting of polyolefin-based fibers, polyester-based fibers, acrylic-based fibers, heat-resistant fibers not completely molten after being heated at 200°C for 3 hours, and composite fibers thereof in a proportion of 90% by mass or more, wherein the heat-resistant fibers are at least one of polyetheretherketone fibers, polyetherketone fibers, polyetherketoneketone fibers, polyphenylene sulfide fibers, aromatic polyamide fibers, aramid fibers, polyimide-based fibers, polyetherimide fibers, polyamideimide fibers, polybenzoxazole fibers, polybenzoimidazole fibers, polybenzothiazole fibers, polytetrafluoroethylene fibers, melamine fibers, and novoloid fibers, and
the fiber structure has a basis weight of 20 to 180 g/m$^2$.

**2.** The fiber structure according to claim 1, wherein the fiber structure includes a heat-resistant extra-fine fiber layer as the extra-fine fiber layer and a heat-resistant substrate layer as the substrate layer, the heat-resistant extra-fine fiber layer comprises heat-resistant extra-fine fibers not completely molten after being heated at 200°C for 3 hours, and the heat-resistant substrate layer comprises heat-resistant non-extra-fine fibers not completely molten after being heated at 200°C for 3 hours.

**3.** The fiber structure according to claim 1 or 2, wherein the mixture portions in the fiber structure have an average width W of 120 μm or more, the width is determined along a boundary line between the central region and the distal region in a cross section along the thickness direction of the fiber structure.

**4.** The fiber structure according to claim 3, wherein the extra-fine fibers have an existence proportion measured in accordance with the method described in the description of 1 to 20% in the distal region in the cross section of the fiber structure.

**5.** The fiber structure according to any one of claims 1 to 4, wherein the fiber structure has a density of the extra-fine fibers excluding the non-extra-fine fibers of 0.1 g/cm$^3$ or less.

**6.** The fiber structure according to any one of claims 1 to 5, wherein the extra-fine fiber layer is a meltblown nonwoven fabric; and the substrate layer is a spunlace nonwoven fabric.

**7.** The fiber structure according to any one of claims 1 to 6, wherein the fiber structure comprises fibers unmelted after heating at 200°C for 3 hours.

**8.** The fiber structure according to any one of claims 1 to 7, wherein the fiber structure is an electret fiber structure.

**9.** The fiber structure according to any one of claims 1 to 8, wherein the fiber structure has a collection efficiency as measured as set out in the specification of 70% or higher.

**10.** The fiber structure according to any one of claims 1 to 9, wherein the fiber structure has a QF value of 0.21 or more, wherein the QF value is calculated from a collection efficiency measured in accordance with the method described in the description and a pressure loss measured in accordance with the method described in the description and represented by the following formula:

$$\text{QF value} = -\ln(1 - \text{collection efficiency (\%)} / 100) / \text{pressure loss (Pa)}.$$

**11.** The fiber structure according to any one of claims 1 to 10, wherein the fiber structure has a collection efficiency measured in accordance with the method described in the description of 70% or more after heating at 100°C for 48 hours.

**12.** A filter comprising the fiber structure recited in any one of claims 1 to 11.

**13.** A mask comprising the filter recited in claim 12.

## Patentansprüche

**1.** Faserstruktur, umfassend eine extrafeine Faserschicht, die sich in einer ebenen Richtung ausbreitet, und eine Substratschicht, die an die extrafeine Faserschicht angrenzt, wobei

die extrafeine Faserschicht extrafeine Fasern mit einem zahlenmittleren Einzelfaserdurchmesser, gemessen wie in der Beschreibung angegeben, von 5 μm oder weniger umfasst;
die Substratschicht nicht-extrafeine Fasern mit einem zahlenmittleren Einzelfaserdurchmesser, gemessen wie in der Beschreibung angegeben, von 7 μm oder mehr umfasst;
in einem Querschnitt entlang einer Dickenrichtung der Faserstruktur die Substratschicht Mischungsabschnitte enthält, in denen jeweils einige der zwischen die nicht-extrafeinen Fasern geschobenen extrafeinen Fasern in einer Querrichtung aufgeweitet sind; und wobei die Substratschicht gleichmäßig in drei Segmente aufgeteilt ist und jedes der Segmente nacheinander von der Seite der extrafeinen Faserschicht aus als ein proximaler Bereich, ein zentraler Bereich und ein distaler Bereich bezeichnet wird, wobei mindestens ein Teil der geschobenen extrafeinen Fasern aus der extrafeinen Faserschicht den distalen Bereich erreicht,
wobei die Faserstruktur ein verschlungenes Produkt von einer oder mehreren extrafeinen Faserschichten, die aus den extrafeinen Fasern gebildet sind, mit einer oder mehreren nicht-extrafeinen Faserschichten, die aus den nicht-extrafeinen Fasern gebildet sind, ist,
die extrafeine Faserschicht ein Vliesstoff ist,
die nicht-extrafeine Faserschicht ein Vliesstoff ist,
die Fasern, die die Substratschicht bilden, mindestens eine Spezies, ausgewählt aus der Gruppe, bestehend aus Fasern auf Polyolefin-Basis, Fasern auf Polyester-Basis, Fasern auf Acryl-Basis, wärmebeständigen Fasern, die nach Erwärmen bei 200°C für 3 Stunden nicht vollständig geschmolzen sind, und Verbundfasern davon, in einem Anteil von 90 Massen-% oder mehr enthalten, wobei die wärmebeständigen Fasern mindestens eine von Polyetheretherketon-Fasern, Polyetherketon-Fasern, Polyetherketonketon-Fasern, Polyphenylensulfid-Fasern, aromatische Polyamid-Fasern, Aramid-Fasern, Fasern auf Polyimid-Basis, Polyetherimid-Fasern, Polyamidimid-Fasern, Polybenzoxazol-Fasern, Polybenzoimidazol-Fasern, Polybenzothiazol-Fasern, Polytetrafluorethylen-Fasern, Melamin-Fasern und Novoloid-Fasern sind, und die Faserstruktur ein Flächengewicht von 20 bis 180 g/m$^2$ aufweist.

**2.** Faserstruktur nach Anspruch 1, wobei die Faserstruktur eine wärmebeständige extrafeine Faserschicht als die extrafeine Faserschicht und eine wärmebeständige Substratschicht als die Substratschicht umfasst, wobei die wärmebeständige extrafeine Faserschicht wärmebeständige extrafeine Fasern umfasst, die nach Erwärmen bei 200°C für 3 Stunden nicht vollständig geschmolzen sind, und die wärmebeständige Substratschicht wärmebeständige nicht-extrafeine Fasern umfasst, die nach Erwärmen bei 200°C für 3 Stunden nicht vollständig geschmolzen sind.

**3.** Faserstruktur nach Anspruch 1 oder 2, wobei die Mischungsabschnitte in der Faserstruktur eine durchschnittliche Breite W von 120 μm oder mehr aufweisen, wobei die Breite entlang einer Grenzlinie zwischen dem zentralen Bereich und dem distalen Bereich in einem Querschnitt entlang der Dickenrichtung der Faserstruktur bestimmt wird.

**4.** Faserstruktur nach Anspruch 3, wobei die extrafeinen Fasern einen Bestandsanteil, gemessen nach dem in der Beschreibung beschriebenen Verfahren, von 1 bis 20% in dem distalen Bereich im Querschnitt der Faserstruktur aufweisen.

**5.** Faserstruktur nach einem der Ansprüche 1 bis 4, wobei die Faserstruktur eine Dichte der extrafeinen Fasern, ausgenommen der nicht-extrafeinen Fasern, von 0,1 g/cm$^3$ oder weniger aufweist.

**6.** Faserstruktur nach einem der Ansprüche 1 bis 5, wobei die extrafeine Faserschicht ein Schmelz-Blas-Vliesstoff ist; und die Substratschicht ein Spinn-Vliesstoff ist.

**7.** Faserstruktur nach einem der Ansprüche 1 bis 6, wobei die Faserstruktur Fasern umfasst, die nach Erwärmen bei 200°C für 3 Stunden ungeschmolzen sind.

**8.** Faserstruktur nach einem der Ansprüche 1 bis 7, wobei die Faserstruktur eine Elektret-Faserstruktur ist.

**9.** Faserstruktur nach einem der Ansprüche 1 bis 8, wobei die Faserstruktur eine Sammeleffizienz, gemessen wie in der Beschreibung angegeben, von 70% oder mehr aufweist.

**10.** Faserstruktur nach einem der Ansprüche 1 bis 9, wobei die Faserstruktur einen QF-Wert von 0,21 oder mehr aufweist, wobei der QF-Wert aus einer Sammeleffizienz, gemessen nach dem in der Beschreibung beschriebenen Verfahren, und einem Druckverlust, gemessen nach dem in der Beschreibung beschriebenen Verfahren, berechnet und durch die folgende Formel dargestellt wird:

$$\text{QF-Wert} = -\ln(1 - \text{Sammeleffizienz}\ (\%) / 100) / \text{Druckverlust}\ (\text{Pa}).$$

**11.** Faserstruktur nach einem der Ansprüche 1 bis 10, wobei die Faserstruktur eine Sammeleffizienz, gemessen nach dem in der Beschreibung beschriebenen Verfahren, von 70% oder mehr nach Erwärmen bei 100°C für 48 Stunden aufweist.

**12.** Filter, umfassend die Faserstruktur nach einem der Ansprüche 1 bis 11.

**13.** Maske, umfassend den Filter nach Anspruch 12.

**Revendications**

**1.** Structure de fibres comprenant une couche de fibres extrafines s'étendant dans une direction de plan, et une couche de substrat attenante à la couche de fibres extrafines, dans laquelle

la couche de fibres extrafines comprend des fibres extrafines ayant un diamètre de fibre unique moyen en nombre tel que mesuré tel qu'établi dans la spécification de 5 μm ou moins ;
la couche de substrat comprend des fibres non extrafines ayant un diamètre de fibre unique moyen en nombre tel que mesuré tel qu'établi dans la spécification de 7 μm ou plus ;
dans une coupe transversale le long d'une direction d'épaisseur de la structure de fibres, la couche de substrat contient des portions de mélange dans chacune desquelles certaines des fibres extrafines poussées entre les fibres non extrafines sont élargies dans une direction transversale ; et où la couche de substrat est divisée de manière égale en trois segments et chacun des segments est désigné séquentiellement depuis le côté de couche de fibres extrafines en tant que région proximale, région centrale et région distale, au moins une partie des fibres extrafines poussées depuis la couche de fibres extrafines atteint la région distale, dans laquelle la structure de fibres est un produit enchevêtré d'une ou plusieurs couches de fibres extrafines formées des fibres extrafines avec une ou plusieurs couches de fibres non extrafines formées des fibres non extrafines,
la couche de fibres extrafines est un tissu non tissé,
la couche de fibres non extrafines est un tissu non tissé,
les fibres constituant la couche de substrat contiennent au moins une espèce sélectionnée parmi le groupe constitué de fibres à base de polyoléfine, fibres à base de polyester, fibres à base d'acrylique, fibres thermorésistantes non complètement fondues après avoir été chauffées à 200 °C pendant 3 heures, et fibres composites de celles-ci en une proportion de 90 % en masse ou plus, dans laquelle les fibres thermorésistantes sont au moins une de fibres de polyétheréthercétone, fibres de polyéthercétone, fibres de polyéthercétonecétone, fibres de sulfure de polyphénylène, fibres de polyamide aromatique, fibres d'aramide, fibres à base de polyimide, fibres de polyétherimide, fibres de polyamideimide, fibres de polybenzoxazole, fibres de polybenzoimidazole, fibres de polybenzothiazole, fibres de polytétrafluoroéthylène, fibres de mélamine et fibres novoloïdes, et
la structure de fibres a un poids de base de 20 à 180 g/m$^2$.

**2.** Structure de fibres selon la revendication 1, dans laquelle la structure de fibres inclut une couche de fibres extrafines thermorésistantes en tant que couche de fibres extrafines et une couche de substrat thermorésistante en tant que couche de substrat, la couche de fibres extrafines thermorésistantes comprend des fibres extrafines thermorésistantes non complètement fondues après avoir été chauffées à 200 °C pendant 3 heures, et la couche de substrat thermorésistante comprend des fibres non extrafines thermorésistantes non complètement fondues après avoir été chauffées à 200 °C pendant 3 heures.

**3.** Structure de fibres selon la revendication 1 ou 2, dans laquelle les portions de mélange dans la structure de fibres ont une largeur moyenne W de 120 μm ou plus, la largeur est déterminée le long d'une ligne de délimitation entre

la région centrale et la région distale dans une coupe transversale le long de la direction d'épaisseur de la structure de fibres.

**4.** Structure de fibres selon la revendication 3, dans laquelle les fibres extrafines ont une proportion d'existence mesurée conformément au procédé décrit dans la description de 1 à 20 % dans la région distale dans la section transversale de la structure de fibres.

**5.** Structure de fibres selon l'une quelconque des revendications 1 à 4, dans laquelle la structure de fibres a une densité des fibres extrafines excluant les fibres non extrafines de 0,1 g/$cm^3$ ou moins.

**6.** Structure de fibres selon l'une quelconque des revendications 1 à 5, dans laquelle la couche de fibres extrafines est un tissu non tissé ayant subi une fusion-soufflage ; et la couche de substrat est un tissu non tissé lacé par filage.

**7.** Structure de fibres selon l'une quelconque des revendications 1 à 6, dans laquelle la structure de fibres comprend des fibres non fondues après chauffage à 200 °C pendant 3 heures.

**8.** Structure de fibres selon l'une quelconque des revendications 1 à 7, dans laquelle la structure de fibres est une structure de fibres d'électret.

**9.** Structure de fibres selon l'une quelconque des revendications 1 à 8, dans laquelle la structure de fibres a un pouvoir d'arrêt tel que mesuré tel qu'établi dans la spécification de 70 % ou supérieur.

**10.** Structure de fibres selon l'une quelconque des revendications 1 à 9, dans laquelle la structure de fibres a une valeur QF de 0,21 ou plus, dans laquelle la valeur QF est calculée à partir d'un pouvoir d'arrêt mesuré conformément au procédé décrit dans la description et d'une perte de pression mesurée conformément au procédé décrit dans la description, et représentée par la formule suivante :

$$\text{valeur QF} = -\ln(1 - \text{pouvoir d'arrêt (\%)}/100)/\text{perte de pression (Pa)}.$$

**11.** Structure de fibres selon l'une quelconque des revendications 1 à 10, dans laquelle la structure de fibres a un pouvoir d'arrêt mesuré conformément au procédé décrit dans la description de 70 % ou plus après chauffage à 100 °C pendant 48 heures.

**12.** Filtre comprenant la structure de fibres selon l'une quelconque des revendications 1 à 11.

**13.** Masque comprenant le filtre selon la revendication 12.

Fig. 1

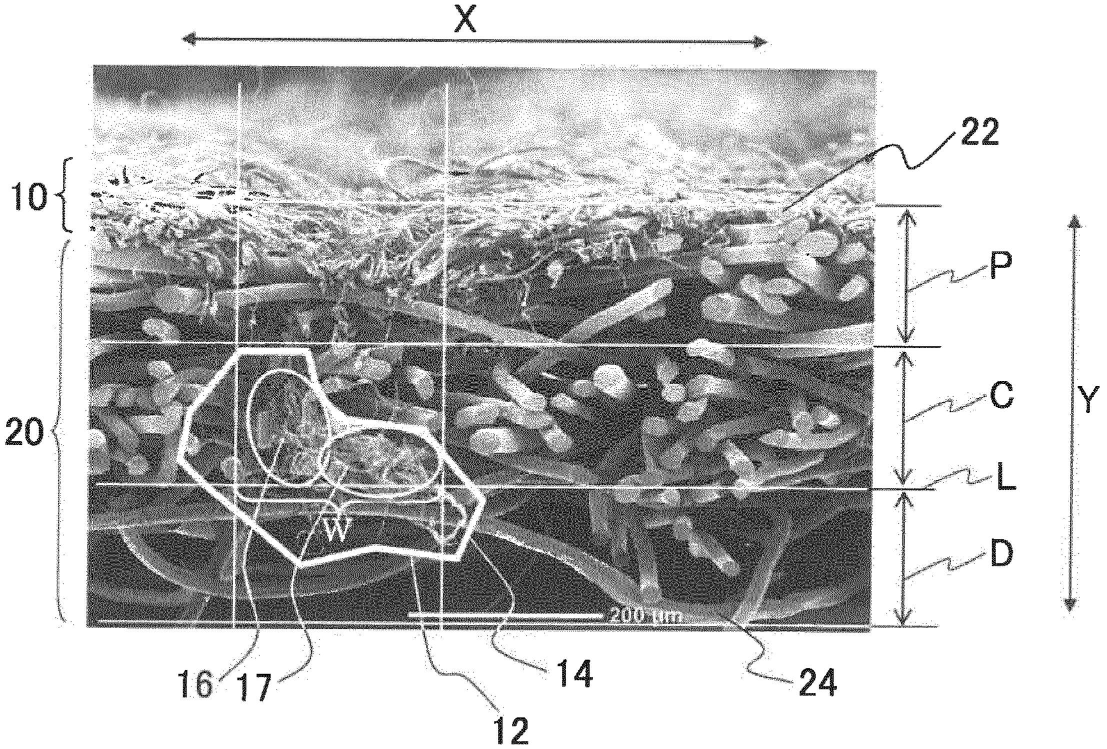
X
10
20
22
P
C
L
D
Y
W
200 µm
16
17
14
24
12

Fig. 2

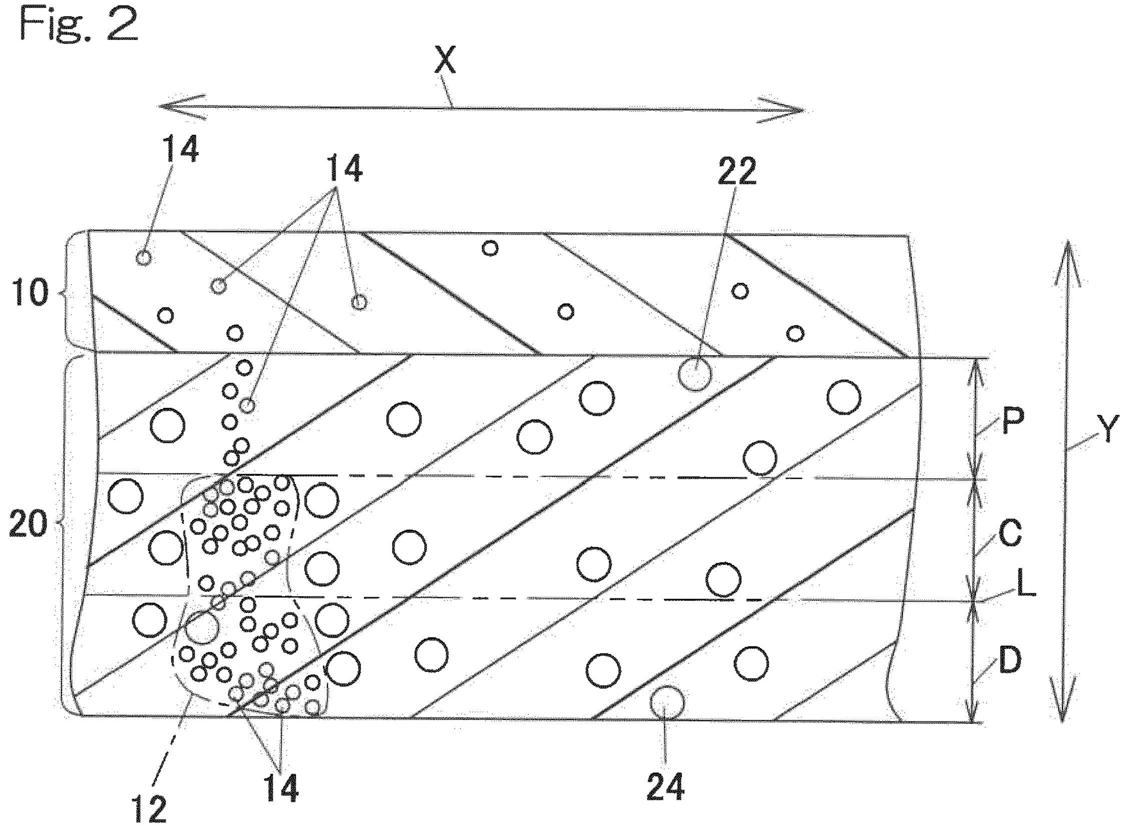
X
14
14
22
10
20
P
C
L
D
Y
12
14
24

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2003003367 A
- JP 2018178337 A